(19) Europäisches Patentamt
European Patent Office
Office européen des brevets

(11) EP 3 098 004 B1

(12) EUROPEAN PATENT SPECIFICATION

(45) Date of publication and mention of the grant of the patent:
08.05.2019 Bulletin 2019/19

(51) Int Cl.:
B23B 19/02 (2006.01)    B23Q 11/12 (2006.01)

(21) Application number: 16174038.6

(22) Date of filing: 28.06.2012

(54) **SPINDLE DEVICE**

SPINDELVORRICHTUNG

DISPOSITIF DE BROCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 20.07.2011   JP 2011159093
20.07.2011   JP 2011159094
22.07.2011   JP 2011160973
22.07.2011   JP 2011160974
22.07.2011   JP 2011160975
22.07.2011   JP 2011160976
06.10.2011   JP 2011222158

(43) Date of publication of application:
**30.11.2016   Bulletin 2016/48**

(62) Document number(s) of the earlier application(s) in accordance with Art. 76 EPC:
**12814297.3 / 2 735 392**

(73) Proprietor: **NSK Ltd.**
**Shinagawa-ku,**
**Tokyo 141 (JP)**

(72) Inventors:
• **YONEYAMA, Hiroki**
  **Maebashi-shi, Gunma 371-8527 (JP)**
• **IWASAKI, Osamu**
  **Maebashi-shi, Gunma 371-8527 (JP)**
• **OGURI, Shoichiro**
  **Maebashi-shi, Gunma 371-8527 (JP)**
• **INAGAKI, Yoshifumi**
  **Maebashi-shi, Gunma 371-8527 (JP)**
• **KATSUNO, Yoshiaki**
  **Fujisawa-shi, Kanagawa 251-8501 (JP)**

(74) Representative: **Grünecker Patent- und Rechtsanwälte**
**PartG mbB**
**Leopoldstraße 4**
**80802 München (DE)**

(56) References cited:
**WO-A2-2006/043170     JP-A- H02 152 702**
**JP-A- 2006 088 245**

## Description

## Technical Field

The present invention relates to a spindle device, and more particularly, to a spindle device capable of high speed rotation of 1 million dmn or above, and applicable to a spindle head of a double column type machining center or to a multiple-axis controlled machine tool or the like according to the preamble of claim 1.

## Background Art

Since a rotary shaft of a spindle device applied to machine tools or the like is applied by a machining load while being rotated at a high speed, the rotary shaft is necessary to maintain the rigidity against the machining load or a deformation restraining characteristic against a centrifugal force at the high-speed rotation, and a metal is usually used as a material thereof. Further, since the rotary shaft uses a tool by replacing it, the rotary shaft is required for wear resistance or hardness. For this reason, since the rotary shaft is limited to an eigenvalue or thermal expansion depending upon a physical property of the metal, it is also limited to the rotational speed or acceleration/deceleration time.

As the machine tool, a horizontal boring machine employing a rotary shaft made of a fiber reinforced composite material is disclosed in Patent Document 1. In the horizontal boring machine, the rotary shaft is axially moved in a sleeve while rotating, and the reduction in weight and thermal expansion is improved by using the fiber reinforced composite material. Also, a metal or ceramic is added to necessary portions of the rotary shaft in view of shock resistance, surface hardness and rigidity for mechanical process which are required for the rotary shaft.

Further, in the spindle device disclosed in Patent Document 2, the rotary shaft is rotatably supported by pneumatic bearings, and an outer peripheral surface of the rotary shaft is made of a fiber layer, thereby suppressing the expansion of the rotary shaft and improving the rigidity thereof. In addition, in the spindle device disclosed in Patent Document 3, both sides of the outer peripheral surface, to which rolling bearings are attached, of the rotary shaft are provided with grooves, and a carbon fiber layer is formed in each groove, thereby suppressing the expansion which is caused by the centrifugal force.

In addition, a tool holder disclosed in Patent Document 4, a tapered portion, a flange portion and a tool holding portion are integrally formed. A collet mounted to a tool is inserted into a tapered hole formed in the tool holding portion, and nuts are fastened to screws formed on the circumference of the tool holding portion, thereby fixing the tool. The outer peripheral surface of the nut is wound by a carbon fiber layer to prevent the deformation of the nut. The tool holder disclosed in Patent Document 5, the outer peripheral surface of the nut is wound by the carbon fiber layer to suppress the expansion of the nut which is caused by the centrifugal force.

As a composite machine tool capable of carrying out working such as cutting or drilling by three-dimensional relative movement between a large workpiece and a tool, there has conventionally been used, for example, a double column type machining center for causing a straight reciprocating movement of a table to which a workpiece is attached, and for controlling a spindle having a tool in X-axis, Y-axis and X-axis directions.

In a double column type machining center, a saddle is attached to a cross rail supported by two columns, a spindle head is attached to an end of a ram moving in a vertical direction with respect to the saddle, and a spindle is pivotally attached to two support arms of this spindle head via a bracket.

A similar spindle device according to the preamble of claim 1 is disclosed in JP-2006-088245-A. As the spindle installed in such a machine tool, there is conventionally known a spindle including a hollow cylinder structure made of fiber reinforced plastic material wound by carbon fiber or aramid fiber at different winding angles, invar alloy of low thermal-expansion fitted in the hollow cylindrical structure, a hollow cylindrical member fitted in the invar alloy, a metal or ceramic layer which is a coating layer formed on an outer peripheral surface of the hollow cylindrical structure, and a spindle end member having a tapered surface into which a tool is inserted (see, e.g., Patent Document 6). In the spindle, since the Invar alloy rather than the metal or ceramic is held between the hollow cylindrical member and the hollow cylindrical member, the thermal expansion in the axial direction of the spindle is reduced, in addition to the decrease in weight, thereby improving its machining precision.

Further, in the conventional spindle device, the spindle side is supported so that a front side thereof is supported by a fixed-side bearing and a rear side thereof is supported by a free-side bearing, and a bearing sleeve is fitted onto the circumference of the free-side bearing. A fitting clearance between the bearing sleeve and a housing fitted onto the bearing sleeve is set to the extent of several $\mu$m to several tens of $\mu$m in view of the thermal expansion of the spindle at the time of operation. Accordingly, the spindle device is configured so that a temperature of the spindle which is the rotational side is higher than that of the housing which is the stationary side due to the heat generation from the motor or the heat from the bearing, the spindle is relatively expanded in an axial direction, but the relative expansion amount difference is escaped to the rear side (otherwise, front side) of the spindle by the sliding movement of the bearing sleeve.

If the heat generation from the bearing or the heat generation from the rotor is increased, the heat is transferred to the bearing sleeve installed at the outside of the bearing, and thus the bearing sleeve is thermally expanded, thereby decreasing the gap between the bearing sleeve and the housing. As a result, the sliding movement of the bearing sleeve is interfered to cause the sliding movement to be poor, and a thrust force is generated on the fixed-side bearing and the free-side bearing, so that a contact pressure of the rolling contact portion of the bearing is increased to cause the increase in preload increase or occurrence of seizing.

Further, if the large gap size is initially provided in view of the thermal expansion not to cause the sliding movement to be poor, there is a problem in that vibration is generated between the bearing sleeve and the housing at the time of low speed (low heat generation), or the portion is worn or scored due to the fretting caused by the vibration. As a result, wear debris may invade into the bearing to cause a damage in the bearing, or the scoring may cause the sliding movement to be poor, which becomes an opposite effect.

The spindle device disclosed in Patent Document 7, each member of a bearing sleeve, a rear cover, and an outer ring retainer is made of a material, such as Invar or Super Invar, having a thermal expansion coefficient smaller than that of steel, so that a variation in initial set clearance is small.

Further, when the members having different coefficients of linear expansion are engaged with each other, a fitting device for a shaft and an annular body includes the shaft made of, for example, steel, an inner ring made of ceramic having a linear expansion coefficient smaller than that of the shaft, and a spacer strongly engaged with the shaft, with an inner peripheral surface thereof being fitted onto an outer peripheral surface of the inner ring, so that the shaft and the inner ring are fitted with a designed clearance, and the spacer pushes the inner ring. Therefore, it is possible to prevent stress from acting on the inner ring due to the thermal expansion of the shaft when the temperature is raised, thereby preventing the damage of the inner ring (see, e.g., Patent Document 8).

**Prior Art Document**

**Patent Document**

Patent Document 1: JP 2-167602 A
Patent Document 2: JP 7-051903 A
Patent Document 3: JP 6-226506 A (FIG. 3)
Patent Document 4: JP 6-218608 A
Patent Document 5: JP 6-226516 A
Patent Document 6: JP 2756155 B2
Patent Document 7: JP 2006-088245 A
Patent Document 8: JP 1-295025 A

**Summary of Invention**

**Problem to be Solved by Invention**

However, as the high-speed rotatable spindle device, a spindle device of a built-in motor type is used, in which a motor is built between the front bearing and the rear bearing which support the rotary shaft. For this reason, if the heat is generated from the rotor fitted onto the rotary shaft, the heat is transferred to the rotary shaft, so that the rotary shaft may be expanded to have an effect on the machining precision. Further, since a temperature difference occurs between the inner and outer rings, the preload of the bearing is remarkably high, so that a PV value of the roller contact portion is raised to cause a problem such as seizing.

Usually, a method of circulating cooling oil near an outer diameter portion of the bearing and a stator in the housing is used to suppress the thermal displacement of the whole spindle device due to the increase in temperature. But, the cooling effect hardly influences on the rotary shaft, and unbalance occurs in which the temperature of the rotary shaft is higher than that of the housing. If a difference occurs in the axial thermal expansion by the unbalance state, a relative position between the stationary-side front bearing and the free-side rear bearing is changed. Accordingly, if there is a problem in that the rear bearing is slid, an abnormal load is generated due to the thrust between the bearings, which cause the damage to the bearing, such as seizing.

The spindle devices disclosed in Patent Documents 1 to 3 do not describe about the built-in motor, and thus do not recognize the problem.

Further, since the bearing for the spindle of the machine tool is required for the high-speed rotation precision and low-vibration characteristic, it eliminates the gap inside the bearing when assembling, that is, the rotary shaft is inserted into the bearings in the state in which the so-called preload is imparted thereto. In the conventional spindle device of the built-in motor, since the heat from the rotor is transferred to the inner ring of the bearing via the rotary shaft made of metal, the temperature of the inner ring of the bearing tends to increase higher that of the outer ring. The thermal expansion between the inner and outer rings is different due to the influence of the temperature difference between the inner and outer rings, and the inner load of the bearing is increased, in addition to the preload. Further, at the time of the high-speed rotation (in particular, a dmn value of 1 million or above), the centrifugal force acting on the balls (rolling elements) is applied to the bearing, the internal load of the bearing becomes excessive, which may causes a trouble such as seizing of the bearing.

In Patent Documents 3 to 5, the carbon fiber layer having high longitudinal elastic modulus and low specific gravity is formed on the outer peripheral side of the nut or the spindle to suppress the expansion of the nut or the spindle by using the mechanical strength of the carbon fiber layer, but does not recognize that the increase in temperature of the inner ring or the expansion of the rotary shaft is suppressed. Further, the built-in motor type is not disclosed, and the above problem is not recognized.

Further, the spindle of the machine tool disclosed in Patent Document 6 is to improve the machining precision by suppressing the thermal expansion of the spindle in the axial direction which is caused by the thermal expansion, but does not recognize the influence of the heat which is transferred from the spindle to the head (housing) to which the spindle is mounted. Since the Invar alloy of the low-thermal expansion is installed in the inner peripheral side of the spindle, there is a problem in that the construction is complicated and thus it is hard to fabricate it.

With the spindle device disclosed in Patent Document 7, the bearing sleeve is made of the material having the thermal expansion coefficient lower than that of the steel, for example, Invar or Super Invar, to decrease the variation in the initial set clearance. Further, these materials are well known in the art as one of a low heat transfer coefficient. However, these materials are admitted of further improvement in which a damping characteristic against vibration is set to be low, for example, is set to any value depending upon the material used.

In recent years, along with the high-speed rotation of the spindle of the machine tool, the setting of the optimum conditions to cope with it is required, and the specification for designing the bearing and the motor to cope with the high-speed rotation are indispensable. That is, if it is rotated at a high speed, a groove of the inner ring of the bearing is expanded by the centrifugal force, and the temperature of the motor or the spindle is also raised, so that the thermal expansion (in particular, radial thermal expansion) of the inner ring is increased. If the two factors are overlapped, for example, in the case of the structure in which the inner gap is decreased in an angular ball bearing and thus the preload is applied to the bearing in advance, the preload of the bearing is further increased. In particular, at the time of the high-speed rotation, since the PV value (P: contact pressure, V: sliding velocity) of the rolling contact portions between the groove of the inner ring and the balls, and between the groove of the outer ring and the balls is increased, it causes lubrication to be poor, such as tearing of a lubricant film, and thus a malfunction such as seizing may occur.

The device disclosed in Patent Document 8 cannot be applied to the spindle device in which the shaft and the inner ring are fitted with interference, and the shaft and the inner ring are fitted with interference of zero or more.

The present invention has been made in view of the above circumstances, and a first object of the present invention is to provide a spindle device capable of improving machining precision by suppressing the increase in temperature of a rotary shaft or a bearing which is caused by heat generation of a rotor. A second object of the present invention is to provide a spindle device capable of improving the machining precision by hardly transferring heat of the spindle device to a machine tool body to decrease thermal deformation of the machine tool body. A third object of the present invention is to provide a spindle device capable of lowering vibration at the time of low-speed rotation, increasing a damping characteristic against the vibration, and being vibrated at a low level at the time of high-speed rotation by reducing an initial gap of a sliding portion between a housing and a bearing sleeve. A fourth object of the present invention is to provide a spindle device capable of preventing a problem, such as seizing, which is caused by the increase in preload of a bearing, by suppressing thermal expansion and centrifugal force affecting on the bearing.

**Means for Solving the Problem**

The above object of the present invention can be achieved by a spindle device as defined by the appended claims.

**Advantages of the Invention**

According to the spindle device of the present invention, the housing provided with the front and rear bearings rotatably supporting the rotary shaft includes the inner sleeve made of the metal and fitted at least onto the rear bearing, and the outer sleeve made of the carbon fiber composite material and fitted onto the inner sleeve. Therefore, by the action of the outer sleeve made of the carbon fiber composite material having the lower heat transfer coefficient, the heat from the rotary shaft is hardly to be transferred to a bracket of a machine side, thereby suppressing the thermal deformation of the machine side and thus performing the machining with the high precision. In particular, in the spindle device of a built-in motor type built with a driving motor therein, since the heat generated from the motor is hardly to be transferred to the machine side, the effect of the present invention is large. Further, the specific weight of the carbon fiber composite material is low, and it is possible to decrease the mass and inertia of the spindle device, thereby enabling the spindle head to move at a high speed, thereby improving its yield.

Further, according to the spindle device of the present invention, the bearing sleeve fitted in the housing with clearance includes at least annular carbon fiber composite material having the same axial length as the bearing sleeve. Therefore, since the thermal expansion of the outer diameter of the sleeve which is caused by the raised temperature of the bearing sleeve is suppressed, the gap between the outer diameter of the sleeve and the inner diameter of the housing is not decreased. As a result, an initial gap of a sliding portion between the housing and the bearing sleeve can be shortened, thereby reducing the vibration at the time of the low speed while maintaining the slidability. Since the carbon fiber composite material has anisotropy according to an orientation direction of the carbon fiber, the gap setting can be selected by arbitrarily changing the thermal expansion coefficient. Accordingly, if the reduction of the gap which is caused by the difference between the raised temperature of the bearing sleeve and the raised temperature of the housing side can be supposed, it is possible to select the orientation direction or the angle of the fiber so as to obtain the optimum thermal expansion coefficient, which is superior relative to the conventional material (such as Invar).

**Brief Description of Drawings**

FIG. 1 is a cross-sectional view of a spindle device according to a first embodiment not falling under the scope of the appended claims.

FIG. 2 is a cross-sectional view explaining a method of engaging a first cylindrical member and a second cylindrical member of a rotary shaft;

FIG. 3 is a cross-sectional view of a spindle device according to a modification of the first embodiment not falling under the scope of the appended claims;

FIG. 4 is a cross-sectional view of a spindle device according to a second embodiment not falling under the scope of the appended claims;

FIG. 5 is a cross-sectional view of a spindle device according to a modification of the second embodiment not falling under the scope of the appended claims;

FIG. 6 is a cross-sectional view of a spindle device according to another modification of the first embodiment not falling under the scope of the appended claims;

FIG. 7 is a cross-sectional view of a spindle device according to a third embodiment not falling under the scope of the appended claims.

FIG. 8 is a cross-sectional view of a spindle device according to a fourth embodiment not falling under the scope of the appended claims;

FIG. 9 is a cross-sectional view of major parts of a spindle device according to a modification of the fourth embodiment not falling under the scope of the appended claims.

FIG. 10 is a cross-sectional view of major parts of a spindle device according to a fifth embodiment not falling under the scope of the appended claims;

FIG. 11 is a cross-sectional view of major parts of a spindle device according to a modification of the fifth embodiment not falling under the scope of the appended claims;

FIG. 12 is a cross-sectional view of major parts of a spindle device according to a modification of the spindle device to which the fourth and fifth embodiments are combined and applied;

FIG. 13 is a schematic view of a double column type machining center to which the spindle device according to a sixth embodiment not falling under the scope of the appended claims is applied;

FIG. 14 is a cross-sectional view of the spindle device according to the sixth embodiment;

FIG. 15 is a cross-sectional view of a spindle device according to a seventh embodiment not falling under the scope of the appended claims;

FIG. 16 is a cross-sectional view of a spindle device according to an eighth embodiment not falling under the scope of the appended claims;

FIG. 17 is a cross-sectional view of a spindle device according to a ninth embodiment of the present invention;

FIG. 18 is a cross-sectional view of a spindle device according to a tenth embodiment of the present invention;

FIG. 19 is a cross-sectional view of a spindle device according to an eleventh embodiment of the present invention;

FIG. 20 is a cross-sectional view of a spindle device according to a first modification of the eleventh embodiment of the present invention;

FIG. 21 is a cross-sectional view of a spindle device according to a second modification of the eleventh embodiment of the present invention;

FIG. 22 is a cross-sectional view of a spindle device according to a twelfth embodiment not falling under the scope of the appended claims;

FIG. 23A is an enlarged cross-sectional view illustrating the vicinity of a front bearing of the spindle device in FIG. 22, FIG. 23B is a side view of a front inner ring spacer, and FIG. 23C is a front view of the front inner ring spacer;

FIG. 24A is an enlarged cross-sectional view illustrating the vicinity of a front bearing of a spindle device according to a thirteenth embodiment not falling under the scope of the appended claims;

FIG. 24B is a side view of a front inner ring spacer, and FIG. 24C is a front view of the front inner ring spacer;

FIG. 25A is an enlarged cross-sectional view illustrating the vicinity of a front bearing of a spindle device according to a fourteenth embodiment not falling under the scope of the appended claims;

FIG. 25B is a side view of a front inner ring spacer, and FIG. 25C is a front view of the front inner ring spacer;

FIG. 26A is an enlarged cross-sectional view illustrating the vicinity of a front bearing of a spindle device according to a fifteenth embodiment not falling under the scope of the appended claims;

FIG. 26B is a side view of a front inner ring spacer, and FIG. 26C is a front view of the front inner ring spacer;

FIG. 27A is an enlarged cross-sectional view illustrating the vicinity of a front bearing of a spindle device according to a sixteenth embodiment not falling under the scope of the appended claims;

FIG. 27B is a side view of a front inner ring spacer, and FIG. 27C is a front view of the front inner ring spacer;

FIG. 28A is an enlarged cross-sectional view illustrating the vicinity of a front bearing of a spindle device according to a seventeenth embodiment not falling under the scope of the appended claims;

FIG. 28B is a side view of a front inner ring spacer, and FIG. 28C is a front view of the front inner ring spacer;

FIG. 29A is an enlarged cross-sectional view illustrating the vicinity of a front bearing of a spindle device according to an eighteenth embodiment not falling under the scope of the appended claims;

FIG. 29B is a side view of a front inner ring spacer, and FIG. 29C is a front view of the front inner ring spacer;

FIG. 30A is an enlarged cross-sectional view illustrating the vicinity of a front bearing of a spindle device according to a nineteenth embodiment not falling under the scope of the appended claims;

FIG. 30B is a side view of a front inner ring spacer, and FIG. 30C is a front view of the front inner ring spacer;

FIG. 31A is an enlarged cross-sectional view illustrating the vicinity of a front bearing of a spindle device according to a twentieth embodiment not falling under the scope of the appended claims;

FIG. 31B is a side view of a front inner ring spacer, and FIG. 31C is a front view of the front inner ring spacer;

FIG. 32 is a view explaining a method of fastening the front inner ring spacer and an inner ring in the spindle device in FIG. 31;

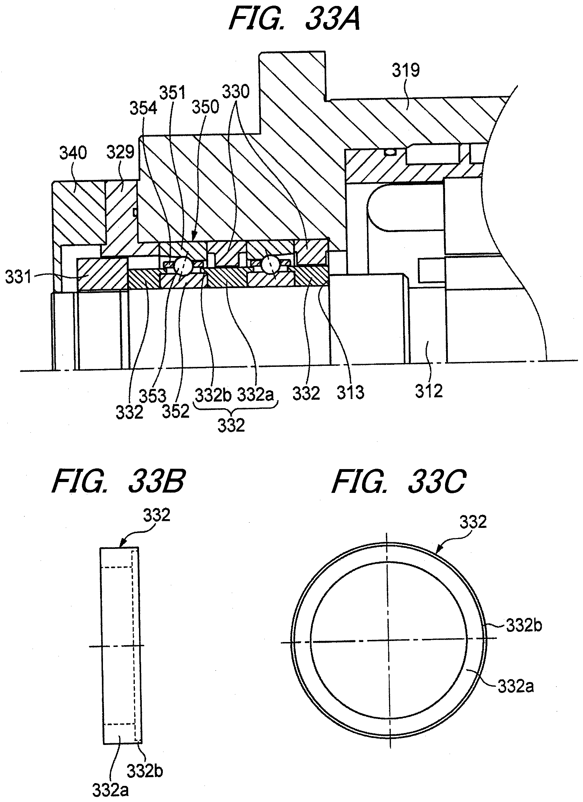

FIG. 33A is an enlarged cross-sectional view illustrating the vicinity of a front bearing of a spindle device according to a twenty-first embodiment not falling under the scope of the appended claims;

FIG. 33B is a side view of a front inner ring spacer, and FIG. 33C is a front view of the front inner ring spacer; and

FIG. 34 is an enlarged cross-sectional view illustrating the vicinity of a rear bearing of a spindle device according to a twenty-second embodiment not falling under the scope of the appended claims.

## Description of Embodiments

Hereinafter, a spindle device according to each embodiment will be described in detail with reference to the drawings.

## Embodiment 1

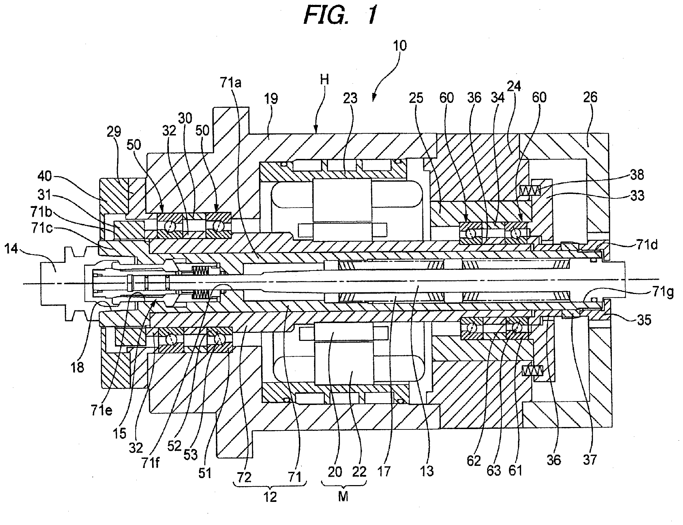

As illustrated in FIG. 1, a spindle device 10 is a built-in motor type, and includes a hollow rotary shaft 12 installed in a center portion in an axial direction thereof, and a draw bar 13 slidably inserted and fitted in a shaft core of the rotary shaft 12. The draw bar 13 presses a collet portion 15 fixing a tool holder 14 in a direction (a right direction in the drawing) opposite to a tool side by a biasing force of a disc spring 17, and the tool holder 14 is fitted on a tapered surface 18 of the rotary shaft 12. A tool (not illustrated) is attached to the tool holder 14, and thus the rotary shaft 12 is clamped to the tool at one end thereof, so that the tool can be attached.

Further, the rotary shaft 12 is rotatably supported in a housing H by front bearings 50, 50 of two rows for supporting a tool side and rear bearings 60, 60 of two rows for supporting a side opposite to the tool side. The housing H includes a front cover 40, a front bearing outer ring holder 29, an outer cylinder 19, a rear housing 24 and a rear cover 26 in order from the tool side.

A rotor 20 is fitted on an outer peripheral surface of the rotary shaft 12, which is interposed between the front bearings 50, 50 and the rear bearings 60, 60, by shrink fit. A stator 22 disposed around the rotor 20 is fixed to the outer cylinder 19 by fitting a cooling jacket 23, which is shrink-fitted in the stator 22, in the outer cylinder 19 configuring the housing H. Accordingly, the rotor 20 and the stator 22 configure a motor M, and torque is generated from the rotor 20 by supplying electricity to the stator 22, thereby rotating the rotary shaft 12.

Each front bearing 50 is an angular ball bearing including an outer ring 51, an inner ring 52, balls 53 as rolling elements disposed with a contact angle, and a retainer (not illustrated), and each rear bearing 60 is an angular ball bearing including an outer ring 61, an inner ring 62, balls 63 as rolling elements, and a retainer (not illustrated). The front bearings 50, 50 (tandem arrangement) and the rear bearings 60, 60 (tandem arrangement) are cooperatively arranged in a back-to-back relation with each other.

The outer rings 51, 51 of the front bearings 50, 50 are fitted in the outer cylinder 19, and are positioned and fixed, relative to the outer cylinder 19 in an axial direction, via an outer ring spacer 30 by the front bearing outer ring holder 29 which is fastened to the outer cover 19 by a bolt. Further, the inner rings 52, 52 of the front bearings 50, 50 are fitted onto the rotary shaft 12, and are positioned and fixed, relative to the rotary shaft 12 in the axial direction, via the inner ring spacer 32 by a nut 31 fastened to the rotary shaft 12.

The outer rings 61 and 61 of the rear bearings 60, 60 are fitted in a bearing sleeve 25, which is freely slid in the axial direction relative to the rear housing 24, in the rear housing 24, and are positioned and fixed, relative to the bearing sleeve 25 in an axial direction, via an outer ring spacer 34 by a rear bearing outer ring holder 33 which is fastened to the bearing sleeve 25 by a bolt. A coil spring 38 is interposed between the rear housing 24 and the rear bearing outer ring holder 33 to bias the rear bearing outer ring holder 33 toward a rear end side thereof. The rear bearing outer ring holder 33, the bearing sleeve 25, the outer rings 61 and 61, and the outer ring spacer 34 are moved to the rear end side as one body, so that each of the outer rings 61 and 61 are pressed in the axial direction, and thus are applied by a constant pressure preload corresponding to the biasing force of the coil spring 38. The inner rings 62, 62 of the rear bearings 60, 60 are fitted onto the rotary shaft 12, and are positioned and fixed by another nut 35, which is fastened to the rotary shaft 12, via the inner ring spacer 36 and a section to be detected 37 of a speed sensor.

The rotary shaft 12 is configured to have a radially multiple-layered structure having a first cylindrical member 71 made of a metal material such as high-tensile steel or carbon steel, and a second cylindrical member 72 disposed on an outer peripheral surface of the first cylindrical member 71 and made of carbon fiber composite material (CFRP), with the rotor 20 being fitted onto the outer peripheral surface of the second cylindrical member 72.

The inner rings 52, 52 of the front bearings 50, 50, the rotor 20, and the inner rings 62, 62 of the rear bearing 60 are fitted onto the outer peripheral surface of the second cylindrical member 72. Further, the collet portion 15, the draw bar 13, or the disc spring 17, which are moved in the axial direction, are accommodated in the first cylindrical member 71.

The first cylindrical member 71 is formed to be longer than the second cylindrical member 72, and has a small-diameter portion 71a in which the second cylindrical member 72 is disposed, and a large-diameter portion 71c having a male threaded portion 71b to which a nut 31 regulating an axial position of the inner rings 52, 52 of the front bearings 50, 50 is fastened. Further, an end portion, on the side opposite to the tool side, of the small-diameter portion 71a extending from the second cylindrical member 72 is provided with a male screwed portion 71d to which another nut 35 for restraining the axial position of the inner rings 62, 62 of the rear bearings 60, 60 is fastened. The inner peripheral surface of the first cylindrical member 71 is provided with a plurality of sliding contact surfaces 71e, 71f, 71g for slidably guiding the collet portion 15, the draw bar 13 or the disc spring 17, and the inner peripheral surface on the tool side is provided with a tapered surface 18 to which the tool holder 14 is attached.

The carbon fiber composite material forming the second cylindrical member 72 uses one having high specific elastic modulus, low specific gravity, and low thermal expansion coefficient (coefficients of linear expansion), relative to the metal material forming the first cylindrical member 71. In particular, since the specific elastic modulus of the carbon fiber composite material is preferably set to be two times or above as large as that of the used metal material, more preferably, three times or above, to suppress the expansion caused by the centrifugal force of the rotary shaft 12 to an appropriate value. The carbon fiber composite material is anisotropic in a fiber direction, but the fiber direction is determined according to a load direction at forming. Further, isotropy may be used by crossing the fiber direction. The fiber direction may be determined to increase specific elastic modulus in a circumferential direction.

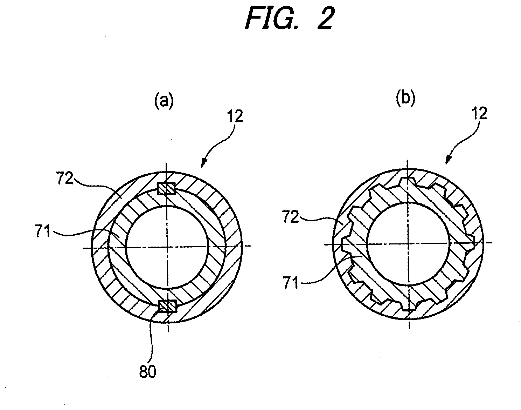

The method of coupling the first cylindrical member 71 and the second cylindrical member 72 may be carried out by fitting them to each other with interference or by bonding them, or may be carried out by forming them integrally. In addition, as illustrated in FIG. 2, so as to transmit sufficient rotation torque, a key 80 may be inserted between the first cylindrical member 71 and the second cylindrical member 72, or the first cylindrical member 71 and the second cylindrical member 72 may be splined.

Since the carbon fiber composite material forming the second cylindrical member 72 located outside in a diameter direction has the high specific elastic modulus, the low specific gravity, and the low thermal expansion coefficient, relative to the metal material forming the first cylindrical member 71, a gap is not formed in the fitted portion thereof due to an effect of the centrifugal force and a variation of the temperature, and there is no problem in that vibration is increased or strength is deteriorated, while rotation.

For example, the carbon fiber composite material forming the second cylindrical member 72 is fabricated by layering a sheet on each other in multiple layers, winding the multiple-layered sheet around a core, and thermally curing the sheet, in which the sheet is manufactured by impregnating a fabric (sheet type) made of threads pulled in parallel and made of carbon fiber containing PAN (polyacrylonitrile) as a major component, or threads made of carbon fiber into thermosetting resin, such as epoxy resin, containing a curing agent.

As characteristics of the carbon fiber composite material, for example, a carbon fiber type which is commercially available from Toho Tenax Co., Ltd. has tensile strength of 2060 MPa, tensile elasticity of 137 GPa, and specific gravity of 1.55 g/cc, when HTA is used, and, as compared with high tensile steel, the tensile strength is equal to or more than that, and the specific gravity is about 1/5 times as large as that. Further, since the thermal expansion coefficient can be set as -5 to +5 $\times$ 10$^{-6}$ (K$^{-1}$) by optimizing a direction and angle of the fiber, it can be set as about 1/2 to 1/10, as compared with the conventional carbon steel.

Further, the rotor 20 and the second cylindrical member 72 are fitted to each other with interference by shrink fit. If the interference at the fitting portion is decreased by the centrifugal force, rotary sliding occurs by torsional torque, and if a gap is formed, the vibration of the spindle may be increased, or machining failure may occur.

For this reason, the interference is sufficiently set in advance in view of the reduced interference which is caused by the centrifugal force. For example, the interference is set to be equal to or more than (centrifugal expansion amount of the inner diameter of the rotor - centrifugal expansion amount of the outer diameter of the second cylindrical member 72), in view of the decrease of the clearance caused by the centrifugal force. More specifically, it can be set by setting a winding angle of the carbon fiber composite material at forming to an appropriate value so that for example, (specific elastic modulus = E (longitudinal elastic modulus) / $\rho$ (density))

becomes an appropriate value, setting a radial thickness of the rotor 20 and a radial thickness of the carbon fiber composite material to an appropriate ratio, or selecting a material of the rotor and a material of the carbon fiber composite material (selection of a diameter of the fiber or a coupling resin material). Further, it may be set by combining the above methods, or setting factors affecting on the expansion caused by the centrifugal force to an appropriate value.

In addition, if the linear expansion coefficient of the carbon fiber composite material is set to be smaller than that of the rotor 20 by the winding angle at forming, it is considered that the interference is decreased by the increase in temperature of the rotor 20, and thus it becomes a gap. For this reason, it is preferable that the interference is set to be equal to or more than (an amount corresponding to the above-described the centrifugal expansion amount + an amount corresponding to the decrease in interference caused by the increased temperature).

Alternatively, a sleeve made of metal (not illustrated) may be interposed between the rotor 20 and the second cylindrical member 72, or the outer peripheral surface of the carbon fiber composite material may be coated by a metal or be sprayed by ceramic, as disclosed in Patent Document 1.

Further, in addition to the interference fit, at least one portion of the rotor 20 and the second cylindrical member 72 may be provided with a spline key, and the carbon fiber composite material may be integrally formed.

According to the spindle device 10 of this embodiment, since the carbon fiber composite material used for the second cylindrical member 72 has the low heat transfer rate, the rotor 20 is fitted onto the second cylindrical member 72, so that the heat generated from the rotor 20 is hardly transferred to the inner rings 52, 62 of the front and rear bearings 50, 60 via the rotary shaft 12, thereby suppressing the temperature difference between the inner and outer rings 51, 52, 61, 62 and thus maintaining the appropriate preload. Further, since the expansion of the rotary shaft 12 itself is suppressed, it is possible to obtain the good machining precision.

Further, since the rotary shaft 12 includes the first cylindrical member 71 made of the metal material in the second cylindrical member 72, the contact surface 72f of the draw bar 13 or the tapered surface 18, to which the tool holder 14 is attached, is constituted by the first cylindrical member 71, the wear resistance can be secured for a specific portion.

Since the rotor 20 is fitted to the second cylindrical member 72 with interference, the occurrence of the gap is suppressed even though the temperature of the rotor 20 is raised, thereby suppressing the rotary sliding of the rotor 20 or the vibration of the rotary shaft 12 from being increased.

Since the first cylindrical member 71 has the small-diameter portion 71a in which the second cylindrical member 72 is disposed, and the large-diameter portion 71c having the male threaded portion 71b to which the nut 31 regulating an axial position of the inner rings 52, 52 of the front bearings 50, 50 is fastened, the nut 31 can be surely fastened to the male screwed portion 71b. Further, since the heat generated from the inner rings 52, 52 of the front bearings 50, 50 is transferred to the metal member, such as the tool holder 14, via the first cylindrical member 71, it is possible to suppress the temperature of the inner faces 52, 52 from being raised.

In the spindle device of the built-in motor type, as the distance between the front bearing 50 and the rear bearing 60 is long, a natural frequency of the rotary shaft in the radial direction is likely to be lowered. In the case of the spindle device of the machine tool, it can be used in all range up to the maximum number of revolutions according to an object to be machined or machining conditions, as well as being used at a specific number of revolutions. Therefore, it at least the natural frequency of the rotary shaft system must not be larger than the frequency at the maximum rotation, the machining cannot be carried out due to resonance action, or the rotary shaft 12 is probably vibrated abnormally at a resonance region. In this embodiment, since the carbon fiber composite material having the high specific elastic modulus, as compared with the metal material, the natural frequency (in particular, natural frequency of the radial direction) of the rotary shaft system can be increased in the case of the same bearing span, thereby increasing the maximum number of revolutions of the spindle device and thus extending the machining rotation region.

Since the carbon fiber composite material has the good vibration damping, as compared with the metal material, dynamic rigidity of the rotary shaft 12 is improved. As a result, chattering vibration is hardly generated under severe machining condition or at the finishing, and the roughness of the machined surface becomes good, thereby improving the quality or glossiness of the machined surface and stabilizing the machining precision.

Further, a machining time or deceleration time of the spindle device depends on a dimension of rotational inertia J. Herein, the rotational inertia of the hollow cylinder is given by the following calculation formula, and has a relation proportional to the biquadrate of the diameter.

$$ J = (D4 - d4) \cdot L \cdot \eta \cdot \pi / 32 $$

Herein, D is an outer diameter of a hollow cylinder, d is an inner diameter of the hollow cylinder, L is an axial length of the hollow cylinder, and $\eta$ is specific gravity.

Accordingly, as the carbon fiber composite material having the low specific gravity is employed for the rotary shaft 12 taking a large weight ratio among major constituent members of the spindle device, the whole weight of the rotary shaft 12 is lowered. Further, the carbon fiber composite material is employed for the second cylindrical member 72 which is spaced apart from a rotation center, the rotational inertia can be reduced. As a result, the machining time and the deceleration time of the spindle device are remarkably decreased, thereby shortening the time required for exchanging the machining tool and thus performing the machining with high efficiency.

In addition, since the carbon fiber composite material has a corrosion resistance, the front bearings 50, 50 and the rear bearings 60, 60 are fitted onto the second cylindrical member 72, so that the surface of the rotary shaft 12 is prevented from being corroded due to immersion of adhesion of the coolant which causes rust to generate. Therefore, it is possible to prevent the bearing from being seized due to immersion of the rust into the bearing and lubrication failure.

As the metal material exists at the inner diameter side or both end portions, a reference surface of the finishing on the outer diameter and the inner diameter of the rotary shaft is secured, thereby performing the finishing with high precision. If the reference surface is provided on the carbon fiber composite material, the wearing or deformation is likely to occur, and thus it is difficult to secure concentricity and roundness which are required for the high-speed spindle. If the concentricity and the roundness are poor, the imbalance is large, the vibration is generated at the high-speed rotation, and the machining precision is defective.

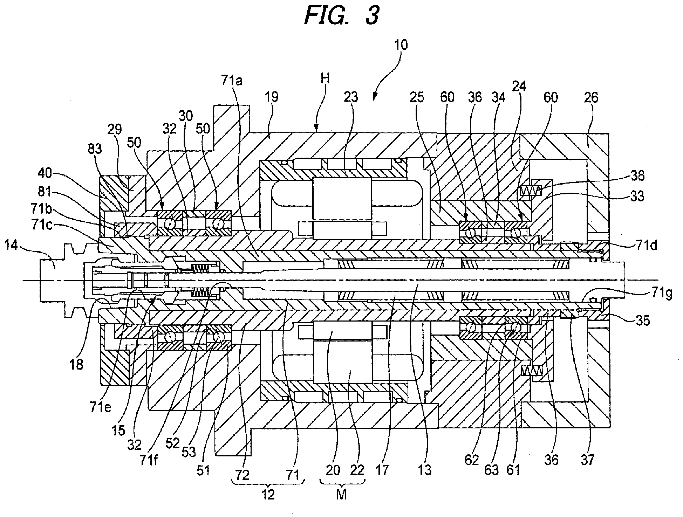

Like a variation of the first embodiment illustrated in FIG. 3, the inner rings 52, 52 of the front bearings 50, 50 may be configured to be positioned relative to the axial direction by a fixing sleeve 81 which is fitted onto the first cylindrical member 71 of the rotary shaft with interference. Further, the assembling of the fixing sleeve 81 to the first cylindrical member 71 is carried out by clearance fit, and the disassembling of the fixing sleeve 81 to the first cylindrical member 71 is carried out by applying hydraulic pressure to a hydraulic chamber 83 installed between the fixing sleeve 81 and the first cylindrical member 71.

In the case of the above configuration, since the fixing sleeve 81 and the first cylindrical member 71 are fitted with interference, an effective contact area between the fixing sleeve 81 and the first cylindrical member 71 is increased to improve the thermal conductivity. Therefore, the heat generated from the inner ring 52 of the front bearing 50 can be effectively escaped to the first cylindrical member 71 via the fixing sleeve 81.

Since the fixing sleeve 81 is configured to be directly in contact with the inner ring 52 without using the spacer or the like, the axial length of the fixing sleeve 81 can be set to be long. Accordingly, the axial length of the fitted portion between the fixing sleeve 81 and the first cylindrical member 71 becomes long, thereby enlarging the contact area for the heat transfer.

Since the heat generated from the inner ring 52 of the front bearing 50 is effectively transferred to the first cylindrical member 71 side via the fixing sleeve 81, the temperature of the inner ring 52 is lowered to reduce the temperature difference between the inner ring 52 and the outer ring 51. Accordingly, the increase in preload during rotation of the front bearing 50 is decreased, and thus the PV value of the rolling contact portion of the rolls 53 of the inner ring 52 and the rolls 53 of the outer ring 51 can be suppressed, thereby preventing the front bearing 50 from being seized.

Since the fixing sleeve 81 and the first cylindrical member 71 of the rotary shaft 12 are fitted with interference, the leaning of the fixing sleeve 81 to the rotary shaft 12 is suppressed, and thus the inner face 52 can be uniformly fixed, thereby further improving the machining precision.

Like the above-described embodiment, even in the case where the inner ring 52 is positioned in the axial direction by the nut 31, the effective contact area of the heat transfer is enlarged by employing specifications which extends the axial length of the nut 31, shortens a thread pitch thereof (employing a fine thread nut), and extremely shortens the fitting gap between the nut 31 and the first cylindrical member 71, and the spacer 32 and the second cylindrical member 72 (e.g., transition fit), thereby escaping the heat generated from the inner ring 52. Similarly, in the case where the inner ring 52 is positioned in the axial direction by the nut 31, the inner ring 52 is uniformly fixed by correcting the leaning thereof when the nut 31 is assembled, thereby securing the machining precision.

The front bearing 50 installed at the tool side is a bearing undertaking a cutting load, and its heating quantity is high due to the load. Further, since the tapered surface 18 maintaining the tool holder 14 is installed at the tool side of the spindle device 10, a thickness for securing the shaft rigidity or the natural frequency of the shaft system, and thus the inner diameter of the front bearing 50 tends to increase. As a result, the dmn value of the front bearing 50 is increased. Therefore, the configuration including the fixing sleeve installed as described above to effectively escape the heat generated from the front bearing 50 is very effective.

Meanwhile, the rear bearing 60 installed at the side opposite to the tool side does not directly undertake the cutting load, as compared with the front bearing 50, and its size is decreased, as compared with the front bearing 50. Therefore, like the above-described embodiment, it is permissible for the configuration which is positioned in the axial direction by the nut 35. However, in the case where there is a room to secure an axial space, it may be configured (not illustrated) so that the inner rings 62, 62 of the rear bearings 60, 60 are positioned in the axial direction relative to the rotary shaft 12 by the fixing sleeve which is fitted onto the first cylindrical member 71 with interference, without using the nut 35.

**Embodiment 2**

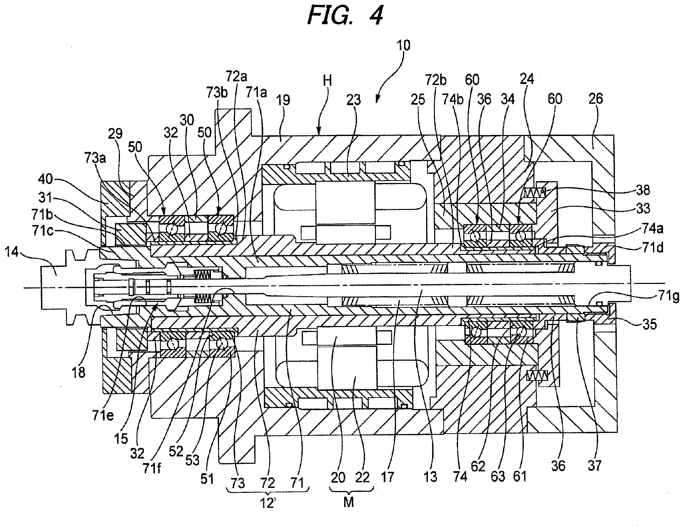

Next, a spindle device according to the second embodiment will be described in detail with reference to FIG. 4. Further, the same or similar parts as those of the first embodiment are indicated by the same reference numerals, and the description thereof will be omitted or simplified.

According to the second embodiment, in addition to the first cylindrical member 71 made of the same metal material as that of the first embodiment and the second cylindrical member 72 made of the carbon fiber composite material (CFRP), the rotary shaft 12 also includes two third cylindrical members 73, 74 made of a metal materials, the third cylindrical members being disposed on the outer peripheral surface of the second cylindrical member 72, and the inner rings 52, 52 of the front bearings 50, 50 and the inner rings 62, 62 of the rear bearings 60, 60 being respectively fitted onto the outer peripheral surface of the third cylindrical members.

The second cylindrical member 72 has stepped portions 72a, 72b, of which an outer peripheral surface has a small diameter, at front and rear portions which are spaced positions in the axial direction with respect to the axial intermediate portion, the rotor 20 being fitted onto the outer peripheral surface of the intermediate portion, and the third cylindrical members 73, 74 are disposed on the stepped portions. The third cylindrical members 73, 74 have sleeve portions 73a, 74a fitted onto an outer peripheral surface having a small diameter which are located at a front side than the stepped portion 72a and a rear side than the stepped portion 72b, and flange portions 73b, 74b extending radially outward from opposite nut side ends of the sleeve portions 73a, 74a and held between axial sides of the stepped portions 72a, 72b and axial end faces of the inner rings 52, 62. Further, an outer diameter of the flange portion 74b is set to be an outer diameter or below of the outer peripheral surface, on which the rotor 20 is fitted, so that it does not interfere when the rotor 20 is fitted onto the second cylindrical member 72.

The third cylindrical members 73, 74 is a thin-walled sleeve which is fitted onto the outer peripheral surface of the second cylindrical member 72, and a metal material, such as high-tensile steel or carbon steel, is preferably selected so that its surface hardness is equal to that of the first cylindrical member 71. The third cylindrical members 73, 74 constituted of the thin-walled sleeve is coupled with the outer peripheral surface of the second cylindrical member 72 by covering the outer peripheral surface 72 through a shrink fit, or using a slight shrink fit and adhesion in combination. The inner rings 52, 52 of the front bearings 50, 50 and the inner rings 62, 62 of the rear bearings 60, 60 are fitted onto the outer peripheral surface of the third cylindrical members 73, 74 with interference.

The outer peripheral surface of the second cylindrical member 72 made of the carbon fiber composite material which is coupled to the first cylindrical member 71 is subjected to the finishing to secure the proper fit with the third cylindrical members 73, 74. Further, the outer peripheral surfaces of the third cylindrical members 73, 74 made of the metal material is subjected to the finishing to secure the proper engagement with each of the inner rings 52, 62.

However, the carbon fiber composite material constituting the second cylindrical member 72 is superior in the specific elastic modulus, as compared with the metal material, the surface hardness is likely to depend upon the resin material becoming a base material, and is relatively soft. Also, the engagement between the rotary shaft 12 and each of the inner rings 52, 62 is necessary carried out by an interference fit of at least zero gap to increase its rigidity of the spindle shaft or improve the rotation precision of the shaft.

There is no problem even though the interference value is small in the spindle having a relatively low using rotation frequency, but the expansion of the inner rings 52, 62 caused by the centrifugal force is higher than the rotary shaft 12, in the case of the spindle used for the high-speed rotation. For this reason, if the interference is small, the gap becomes big, thereby causing a problem such as vibration or fretting of the rotary shaft. Therefore, it is necessary to increase the interference. Under this condition, in the case where the carbon fiber composite material and the inner ring are locally (only the axial portion of the inner ring) fitted with interference, the pressure of the contact surface between the carbon fiber composite material and the inner ring is locally increased, so that the fitting portion may not be suitably adhered due to damage or deformation of the surface of the carbon fiber composite material.

According to this embodiment, as the third cylindrical members 73, 74 are used, the carbon fiber composite material (the second cylindrical member 72) and the third cylindrical members 73, 74 can be engaged with each other widely in the axial direction. Further, as the sleeve has the thin wall, even though the sleeve is fitted onto the carbon fiber composite material with large interference, the third cylindrical members 73, 74 are expected to elastically deform, thereby decreasing the contact surface pressure between them. If the sleeve and the carbon fiber composite material are adhered and joined with small interference, instead of that they are fitted with large interference, the contact surface pressure is not increased.

Further, in the case where the inner rings 52, 62 are fitted onto the outer peripheral surfaces of the third cylindrical members 73, 74 with large interference, the local surface pressure is not directly applied to the surface of the carbon fiber composite material, and a load is acted through the third cylindrical members 73, 74, so that a compressive force caused by the engagement is dispersed. The surface of the carbon fiber composite material is not damaged or deformed by the buffering action.

Since the coefficients of linear expansion of the inner ring and the carbon fiber composite material are different, if the temperature of the spindle is raised according to the increase in rotation, the gap of the fitting portion is changed, like the effect of the centrifugal force. Therefore, in view of these conditions, the fitting when assembling is preferably set so that the fitting gap between the third cylindrical members 73, 74 and the inner rings 52, 62 in operation (e.g., at the time of maximum rotation of the spindle to be objected) is zero interference.

In the case of regular maintenance or replacing the bearing due to a sudden bearing problem, the inner rings 52, 62 are pulled out form the third cylindrical members 73, 74 made of the metal material. There is no problem since the pulling-out structure is similar to the conventional structure in which the inner ring is fitted in the rotary shaft.

As described above, since the third cylindrical members 73, 74 are provided with the flange portions 73b, 74b, the inner ring ends of the bearings 50, 60 can be axially fixed by intermetallic engagement. Since the carbon fiber composite material uses the composite resin material as a base material, if the inner rings 52, 62 and the carbon fiber composite material are tightly bonded by the load, the elastic deformation between the inner ring ends and the carbon fiber composite material tends to increase, so that the fastening engagement by the nuts 31, 35 may be weakened. That is, looking the rigidity as important, when the fastening power is extremely raised, the carbon fiber composite material will be damaged such as breaking or missing. Meanwhile, to ensure the cutting precision, the rigidity to resist axial deformation is necessary. For this reason, such a problem can be solved by installing the flange portions 73b, 74b on the third cylindrical members 73, 74. If the surface hardness of the carbon fiber composite material is relatively high, the axial end faces of the inner rings 52, 62 may be directly bonded to the axial end faces of the stepped portions 72a, 72b of the second cylindrical member 72, without installing the flange portions 73b, 74b. Further, the sleeve portions 73a, 74a and the flange portions 73b, 74b may be constituted of separate members.

According to the spindle device 10 of this embodiment, since the outer peripheral surface of the second cylindrical member 72 at the position axially spaced apart from the rotor 20 which is fitted onto the outer peripheral surface is provided with the third cylindrical members 73, 74 made of the metal material, in which the inner rings 52, 62 of the front and rear bearings 50, 60 are respectively fitted onto the outer peripheral surface of the third cylindrical member, the surface hardness of the third cylindrical members 73, 74 and the inner rings 52, 62 of the bearings 50, 60 can be equal to each other, so that the interference fit between them can be easily carried out. Further, when the bearings 50, 60 are replaced, the engaged surface can be suppressed from occurrence of a problem such as scratch or damage.

The heat generated from the bearing can be transferred to the front bearing nut 31 or the first cylindrical member 71 via the inner ring spacers 32 and 36 rather than the fitting portion (a circumferential area of the fitting portion becomes a heat transferring area) between the third cylindrical members 73, 74 and the inner peripheral surface of the bearing inner rings 52, 62. That is, it is possible to suppress the occurrence of the problem such as seizing, due to that the heat is stagnated in the bearing inner rings 52, 62 and thus the preload is excessive by the temperature difference between the inner and outer rings of the bearing.

Since the third cylindrical members 73, 74 have the flange portions 73b, 74b held between the axial sides of the stepped portions 72a, 72b of the second cylindrical member 72 and the axial end faces of the inner rings 52, 62, even though the opposite nuts 31, 35 are strongly fastened, the inner ring ends of the bearings 50, 60 can be fixed in the axial direction, without the damage of the second cylindrical member 72, such as breaking or missing.

In this embodiment, although the third cylindrical members 73, 74 have the thin-walled sleeves which are fitted onto the outer peripheral surface of the second cylindrical member 72, the third cylindrical members 73, 74 may be a thin-film member joined electrically or chemically to the outer peripheral surface of the second cylindrical member 72. For example, if the following metal plating is used, a strong film can be obtained. For example, a metal plating layer to be strongly connected can be obtained by sequentially forming a primer treatment layer, a metal spraying treatment layer, an intermediate plating layer and an outermost plating layer on the surface (i.e., the outer peripheral surface and the axial end face of the stepped portions 72a, 72b) of the second cylindrical member 72 from its inside.

Herein, the primer treatment layer has, for example, thermal conductivity of 0.001 cal·cm$^{-1}$·sec$^{-1}$·deg$^{-1}$ or above, and is obtained by mixing thermosetting resin with metallic or inorganic power having a specific shape, such as inorganic filler with no flat shape, or inorganic filler with complicated concave/convex surface, which satisfies $\lambda \cdot S \geq 0.05$ ($\lambda$: thermal conductivity, S: surface area represented by m$^2$/g), applying the mixture on the surface of the carbon fiber composite material, and then thermally curing the surface. The material of the metal spraying treatment layer is Cu, Ni, Al, or Fe, and is not specifically limited if the surface is easily electrically plated. The material of the intermediate plating layer is selected by the point of seal aperture performance and corrosion resistance, but Cu or Ni is particularly effective as the result of several experiments for the above purpose. Further, the material of the outermost plating layer is appropriately selected according to the purpose, but Ni and Cu are generally employed. In particular, if the surface harness is required, Cu plating is preferable. Other configurations and operations are similar to those of the first embodiment.

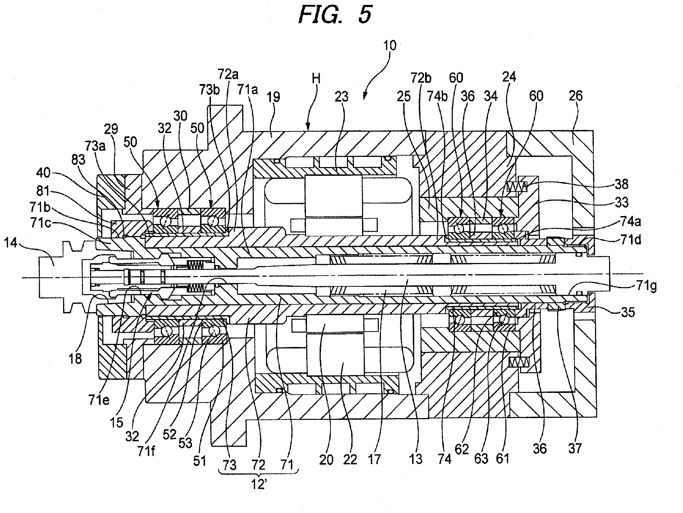

In the modification of the second embodiment illustrated in FIG. 5, the inner rings 52, 52 of the front bearings 50, 50 may be configured so that they are positioned in the axial direction with respect to the rotary shaft 12 by the fixing sleeve 81 which is fitted onto the first cylindrical member 71 of the rotary shaft 12 with interference. In this also, similar effect as that of FIG. 3 is provided.

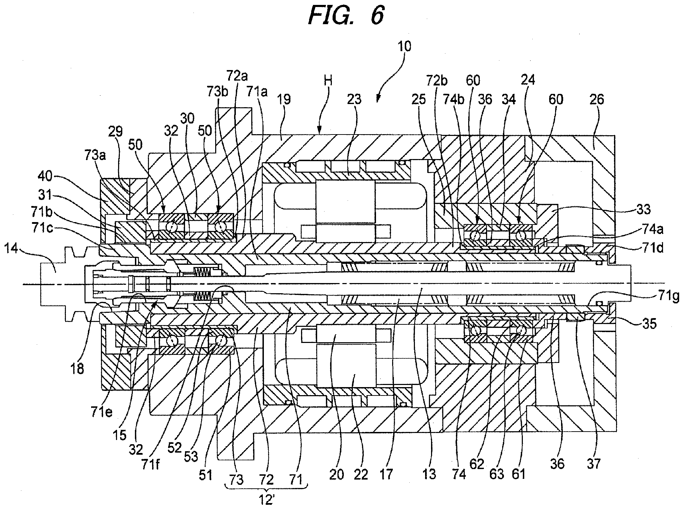

Like the spindle device according to another modification of the second embodiment illustrated in FIG. 6, it may be only configured so that constant pressure preload is respectively imparted to the front bearings 50, 50 and the rear bearings 60, 60. In this instance, the front bearings 50, 50 and the rear bearings 60, 60 are arranged in a back-to-back relation with each other. The spindle device provides similar effect as that of the embodiment described above.

Further, as the spindle device to which the present invention, a pair of angular ball bearings may be configured so that the constant pressure preload is imparted to the front bearings 50, 50, and the rear bearings 60 may be configured as a cylindrical roller bearing of single row.

**Embodiment 3**

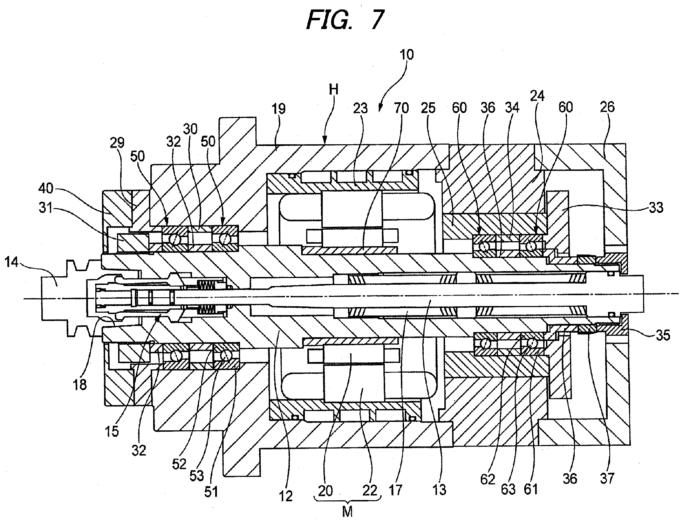

Next, a spindle device according to the third embodiment will be described in detail with reference to FIG. 7. Further, the same or similar parts as those of the first embodiment are indicated by the same reference numerals, and the description thereof will be omitted or simplified.

The rotor 20 of the motor M is disposed to rotate integrally with the rotary shaft 12 through the rotor sleeve 70. Further, the rotary shaft 12 is made of a metal material. The rotor sleeve 70 is made of carbon fiber composite material (CFRP). As the carbon fiber composite material, used is one having the thermal conductivity and the thermal expansion coefficient lower than those of the metal material, the specific elastic modulus higher than that of the metal material, and the specific gravity lower than that of the metal material. In particular, as the carbon fiber composite material having the low thermal conductivity is disposed between the rotor 20 and the rotary shaft 12 as the rotor sleeve 70, thereby insulating between the rotor 20 and the rotary shaft 12 while it has the same strength as the metal. Accordingly, the heat generated from the rotor 20 is hardly to be transferred to the rotary shaft 12, thereby suppressing the heat expansion of the rotary shaft 12 itself and thus maintain the good machining precision.

The heat of the rotor 20 is hardly to be transferred to the inner rings 52, 62 of the front and rear bearings 50, 60 via the rotary shaft 12, thereby suppressing the temperature of the inner rings from being raised to reduce the temperature difference between the inner and outer rings 51, 52, 61, 62. Therefore, it is possible to prevent the problem in that the bearing is seized due to the increase in internal load of the front and rear bearings 50, 60.

Specifically, for example, the carbon fiber composite material is fabricated by layering a sheet on each other in multiple layers, winding the multiple-layered sheet around a core, and thermally curing the sheet, in which the sheet is manufactured by impregnating a fabric (sheet type) made of threads pulled in parallel and made of carbon fiber containing PAN (polyacrylonitrile) as a major component, or threads made of carbon fiber into thermosetting resin, such as epoxy resin, containing a curing agent.

As characteristics of the carbon fiber composite material, for example, a carbon fiber type which is commercially available from Toho Tenax Co., Ltd. has tensile strength of 2060 MPa, tensile elasticity of 137 GPa, and specific gravity of 1.55 g/cc, when HTA is used, and, as compared with high tensile steel, the tensile strength is equal to or more than that, and the specific gravity is about 1/5 times as large as that. Further, since the thermal expansion coefficient can be set as -5 to +5 $\times$ 10$^{-6}$ (K$^{-1}$) by optimizing a direction and angle of the fiber, it can be set as about 1/2 to 1/10, as compared with the conventional carbon steel.

Also, the heat of the outer rings 51 and 61 of the front and rear bearings 50, 60 is radiated via the housing H to be fitted, but the heat of the inner rings 52, 62 is hardly to be radiated, so that the outer rings 51 and 61 tend to become high temperature. Therefore, it is important to control the temperature of the inner rings 52, 62, as for the increased internal load which is caused by the temperature difference between the inner and outer rings 51, 52, 61,62.

The rotor 20 and the rotor sleeve 70, and the rotor sleeve 70 and the rotary shaft 12 are engaged with each other by an interference fit, adhesion, or integral forming. Among them, in the case where the rotor 20 and the rotor sleeve 70 are fitted with interference, expecting the difference between the quantities of the expansion in the axial direction caused by the centrifugal force, or the difference between the expansion amounts in the diameter direction at rotation due to the difference in the expansion amount caused by the centrifugal force, it is preferable to select the appropriate interference so that at least gap is not formed between the inner diameter of the rotating rotor 20 and the outer diameter of the rotor sleeve 70, in view of the number of revolutions of the rotary shaft or the temperature during the rotation.

For example, in view of the reduction in clearance which is caused by the centrifugal force, the interference is set to be equal to or more than (centrifugal expansion amount of the inner diameter of the rotor 20 - centrifugal expansion amount of the outer diameter of the rotor sleeve 70). More specifically, it is set by setting a winding angle of the carbon fiber composite material at forming to an appropriate value so that for example, (specific elastic modulus = E (longitudinal elastic modulus) / p (density)) becomes an appropriate value, setting a radial thickness of the rotor 20 and a radial thickness of the carbon fiber composite material to an appropriate ratio, or selecting a material of the rotor and a material of the carbon fiber composite material (selection of a diameter of the fiber or a coupling resin material). Further, it may be set by combining the above methods, or setting factors affecting on the expansion caused by the centrifugal force to an appropriate value.

In addition, if the linear expansion coefficient of the carbon fiber composite material is set to be smaller than that of the rotor 20 by the winding angle at forming, it is considered that the interference is decreased by the increase in temperature of the rotor 20, and thus it becomes a gap. For this reason, it is preferable that the interference is set to be equal to or more than (an amount corresponding to the above-described centrifugal expansion amount caused by the centrifugal force + an amount corresponding to the decrease in interference caused by the increased temperature).

The specific elastic modulus of the carbon fiber composite material is preferably set to be two times or above as large as that of the used metal material, more preferably, three times or above, to suppress the expansion caused by the centrifugal force of the rotary shaft 12 to an appropriate value. The carbon fiber composite material is anisotropic in a fiber direction, but the fiber direction is determined according to a load direction at forming. Further, isotropy may be used by crossing the fiber direction. The fiber direction may be determined to increase specific elastic modulus in a circumferential direction.

As described above, since the carbon fiber composite material has the thermal conductivity and the thermal expansion coefficient lower than those of the metal material, the specific elastic modulus higher than that of the metal material, and the specific elastic modulus higher than that of the metal material, a gap is not formed in the fitted portion between the rotor sleeve 70 and the rotary shaft 12 due to the effect of the centrifugal force and a variation of the temperature, and there is no problem in that vibration is increased or strength is deteriorated, while rotation.

As described above, with the spindle device 10 of the built-in motor type according to this embodiment, since the rotor 20 is fitted onto the rotary shaft 12 through the rotor sleeve 70 made of the carbon fiber composite material having the thermal conductivity lower than that of the rotary shaft 12 between the front bearing 50 and the rear bearing 60 which rotatably support the rotary shaft 12, the heat generated from the rotor 20 is hardly transferred to the inner rings 52, 62 of the front and rear bearings 50, 60 via the rotary shaft 12, thereby suppressing the temperature difference between the inner and outer rings 51, 52, 61, 62 and thus maintaining the appropriate preload. Further, it is possible to prevent the bearings 50, 60 from being seized. In addition, since the expansion of the rotary shaft 12 itself is also suppressed, it is possible to obtain the good machining precision.

## Embodiment 4

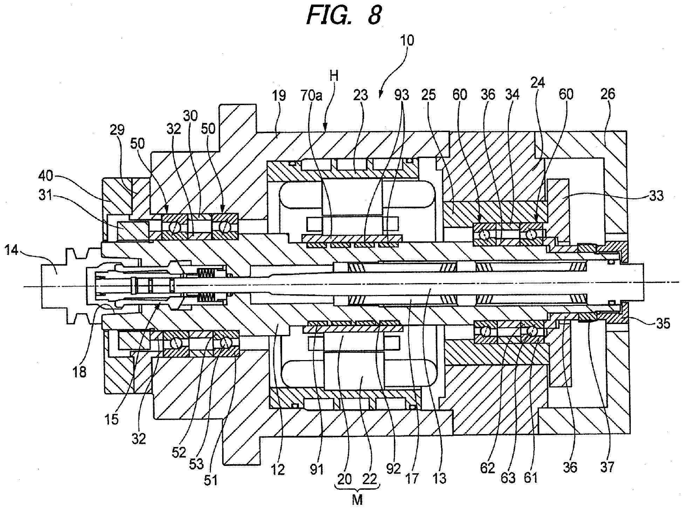

Next, a spindle device according to the fourth embodiment will be described in detail with reference to FIG. 8. Further, the same or similar parts as those of the first embodiment are indicated by the same reference numerals, and the description thereof will be omitted or simplified.

In the fourth embodiment, a rotor sleeve 70a disposed between the rotor 20 and the rotary shaft 12 is made of metal. Further, the outer peripheral surface of the fitted portion of the rotary shaft 12, on which the rotor sleeve 70a is fitted, is provided with annular outward protrusions 92 to define a plurality of annular grooves 91. A carbon fiber composite material (CFRP) 93 is disposed in each annular groove 91 in a ring shape, and is integrally fixed to the rotary shaft 12 by the interference fit, adhesion or integral forming.

As the carbon fiber composite material (CFRP), used is one having the heat transfer coefficient and the thermal expansion coefficient lower than those of the metal material, the specific elastic modulus higher than that of the metal material, and the specific gravity lower than that of the metal material. In particular, the carbon fiber composite material 93 having the low heat transfer coefficient is disposed in the plurality of annular grooves 91 to which the rotor sleeve 70a is fitted, so that a contact area between the rotor sleeve 70a and the rotary shaft 12 is decreased to hardly transfer the heat generated from the rotor 20 to the rotary shaft 12. Therefore, the thermal expansion of the rotary shaft 12 itself is suppressed, and thus the good machining precision is maintained.

The heat of the rotor 20 is hardly to be transferred to the inner rings 52, 62 of the front and rear bearings 50, 60 via the rotary shaft 12, and thus the increase in temperature of the inner ring is suppressed, thereby decreasing the temperature difference between the inner and outer rings 51, 52, 61, 62. Accordingly, it is possible to prevent a problem, for example, in that the bearing is seized due to the increase in internal load of the front and rear bearings 50, 60, while having the same strength as the metal.

Further, the opposite surface of the rotor sleeve 70a and the rotary shaft 12, except for the position in which the carbon fiber composite material 93 having the low heat transfer coefficient is located, that is, the inner peripheral surface of the rotor sleeve 70a and the annular outward protrusions 92, is maintained in the fitting between the metal. If the rotor sleeve 70a made of metal is fitted with the carbon fiber composite material 93 having the low surface hardness relative to the metal which is easily elastically deformed, it is difficult to appropriately maintain the fit. As this embodiment, as the annular outward protrusions 92 of the rotary shaft 12 and the rotor sleeve 70a are maintained in the fitting between the metal, it is possible to easily appropriately maintain the interference fit.

Specifically, for example, the carbon fiber composite material 93 is fabricated by layering a sheet on each other in multiple layers, winding the multiple-layered sheet around a core, and thermally curing the sheet, in which the sheet is manufactured by impregnating a fabric (sheet type) made of threads pulled in parallel and made of carbon fiber containing PAN (polyacrylonitrile) as a major component, or threads made of carbon fiber into thermosetting resin, such as epoxy resin, containing a curing agent. The carbon fiber composite material 93 is anisotropic in a fiber direction, but the fiber direction is determined according to a load direction at forming. Further, isotropy may be used by crossing the fiber direction.

As characteristics of the carbon fiber composite material 93, for example, a carbon fiber type which is commercially available from Toho Tenax Co., Ltd. has tensile strength of 2060 MPa, tensile elasticity of 137 GPa, and specific gravity of 1.55 g/cc, when HTA is used, and, as compared with high tensile steel, the tensile strength is equal to or more than that, and the specific gravity is about 1/5 times as large as that. Further, since the thermal expansion coefficient can be set as -5 to +5 $\times$ 10$^{-6}$ (K$^{-1}$) by optimizing a direction and angle of the fiber, it can be set as about 1/2 to 1/10, as compared with the conventional carbon steel.

A ratio of the annular grooves 91 and the annular outward protrusions 92 of the rotary shaft 12, in other words, a ratio of the contact area of the metal in the fitting portion between the rotor sleeve 70a and the rotary shaft 12 and the contact area between the metal and the carbon fiber composite material 93 is determined on the basis of the balance between an insulation effect and a coupling strength at the fitted portion between the rotor sleeve 70a and the rotary shaft 12.

Also, the heat of the outer rings 51 and 61 of the front and rear bearings 50, 60 is radiated via the housing H to be fitted, but the heat of the inner rings 52, 62 is hardly to be radiated, so that the outer rings 51 and 61 tend to become high temperature. Therefore, it is important to control the temperature of the inner rings 52, 62, as for the increased internal load which is caused by the temperature difference between the inner and outer rings 51, 52, 61,62.

The rotor sleeve 70a and the rotor 20 which are made of the metal are engaged with each other by the interference fit, the adhesion or the integral shaping. If the rotor 20 made by layering plural silicon steel plates is fitted to the shaft portion mixed with the outward protrusions 92 made of the metal and the carbon fiber composite material 93 with interference, the mutual fitting between the silicon steel plate fitted to the outward protrusions 92 and the silicon steel plate fitted to the carbon fiber composite material 93 having the low surface hardness relative to the metal may become uneven. For this reason, a discrepancy may occur in the balance between plural silicon steel plates, thereby affecting the performance of the motor M. Meanwhile, in this embodiment, as the rotor 20 is fitted to the rotary shaft 12 via the rotor sleeve 70a, the fitting does not become uneven, so that the management of the fitting is easy.

If the rotor 20 and the rotor sleeve 70a, and the rotor sleeve 70a and the rotary shaft 12 are fitted with interference, it is preferable to set appropriate interference so that at least gap is not formed between the inner diameter of the rotor 20 and the outer diameter of the rotor sleeve 70a, and the inner diameter of the rotor sleeve 70a and the outer diameter of the rotary shaft 12, during rotation, in view of the number of revolutions of the rotary shaft 12 or the temperature during rotation, by estimating the difference of the expansion amounts in the diameter direction including the difference between expansion amounts in the diameter direction at the rotation which is caused by the difference of the expansion amounts by the centrifugal force, and the difference (substantially equal since the fitting between the metal is performed in this embodiment) of the linear expansion coefficient of each member.

As described above, with the spindle device 10 of the built-in motor type according to this embodiment, since the rotor sleeve 70a is installed between the rotor 20 and the rotary shaft 12, and the carbon fiber composite material having the lower heat transfer coefficient than the rotary shaft 12 is partially provided on the rotary shaft 12 opposite to the rotor sleeve 70a, the heat generated from the rotor 20 is hardly transferred to the inner rings 52, 62 of the front and rear bearings 50, 60 via the rotary shaft 12, thereby suppressing the temperature difference between the inner and outer rings 51, 52, 61, 62 and thus maintaining the appropriate preload. Further, it is possible to prevent the bearings 50, 60 from being seized. In addition, since the expansion of the rotary shaft 12 itself is also suppressed, it is possible to obtain the good machining precision.

Further, the outer peripheral surface of the rotary shaft 12 is provided with the annular outward protrusions 92 to define the plurality of annular grooves 91, and the carbon fiber composite material 93 having the lower heat transfer coefficient than the rotary shaft 12. The inner peripheral surface of the rotor sleeve 70a is fitted onto the annular outward protrusions 92 of the rotary shaft with interference, so that the heat generated from the rotor 20 is hardly to be transferred to the rotary shaft 12 by the carbon fiber composite material 93. Further, the rotary shaft 12 and the rotor sleeve 70a are reliably fitted between the metal.

Since the member having the lower heat transfer coefficient than the rotary shaft 12 is made of the carbon fiber composite material, it is possible to effectively suppress the heat transfer from the rotor 20.

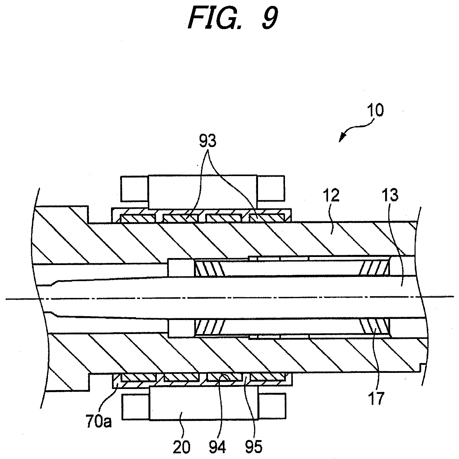

FIG. 9 is a cross-sectional view of a spindle device according to a modification of the fourth embodiment. In the spindle device 10 of the modification, a disposed position of the carbon fiber composite material is contrary to that of the fourth embodiment. The inner peripheral surface of the rotor sleeve 70a made of the metal is provided with annular inward protrusions 95 to define a plurality of annular grooves 94. A carbon fiber composite material (CFRP) 93 is disposed in each annular groove 94 in a ring shape, and is integrally fixed to the rotation sleeve by the interference fit, adhesion or integral forming.

Therefore, the carbon fiber composite material 93 having the low heat transfer coefficient is partially disposed on the inner peripheral surface of the rotor sleeve 70a to decrease the contact area of the metal between the rotor sleeve 70a and the rotary shaft 12. Therefore, an area of transferring the heat from the rotor sleeve 70a to the rotary shaft 12 is decreased to suppress the heat of the rotor 20 from being transferred to the rotary shaft 12 through the rotor sleeve 70a.

As the annular inward protrusions 95 of the rotor sleeve 70a and the outer peripheral surface of the rotary shaft 12 are maintained in the fitting between the metal, the rotor sleeve 70a is fitted onto the rotary shaft 12 with interference, so that the control of the interference is easy. Further, since the carbon fiber composite material 93 is made of a separate member, the rotor sleeve 70a including the carbon fiber composite material 93 can be commonly used with other spindle device.

**Embodiment 5**

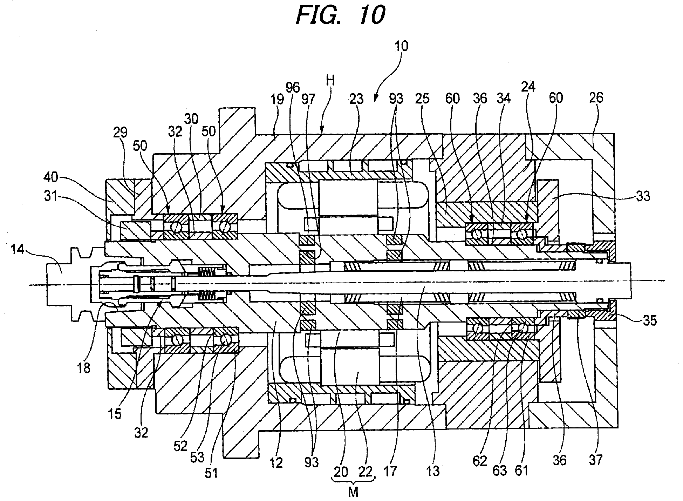

Next, a spindle device according to the fifth embodiment will be described in detail with reference to FIG. 10. Further, the same or similar parts as those of the fourth embodiment are indicated by the same reference numerals, and the description thereof will be omitted or simplified.

As illustrated in FIG. 10, in the spindle device 10 of this embodiment, the rotor 20 is fitted onto the substantially center of the rotary shaft 12 in the axial direction with an interference fit. The rotary shaft 12 is provided one pair of outer peripheral annular grooves 96 on its outer peripheral surface at positions spaced apart from the fitting position to both sides in the axial direction. Further, the inner peripheral surface of the rotary shaft 12 is provided with one pair of inner peripheral annular grooves 97. The carbon fiber composite material (CFRP) 93 having the low heat transfer coefficient relative to the rotary shaft 12 is respectively disposed in the outer peripheral annular grooves 96 and the inner peripheral annular grooves 97 in a ring shape, and then is integrally coupled with the rotary shaft 12 by interference fit, adhesion or integral shaping.

In this way, the carbon fiber composite material 93 having the low heat transfer coefficient is disposed between the fitting portion (substantially axial center portion of the rotary shaft 12) of the rotor 20 and the rotary shaft 12, and the front bearing 50 and the rear bearing 60, and thus a sectional area (thermal conductive area) of the metallic portion having the high thermal conductivity is decreased.

Therefore, the heat of the rotor 20 is hardly to be transferred to the inner rings 52, 62 of the front and rear bearings 50, 60 via the rotary shaft 12, thereby suppressing the temperature of the inner rings from being raised to reduce the temperature difference between the inner and outer rings 51, 52, 61, 62. As a result, it is possible to prevent the problem in that the bearing is seized due to the increase in internal load of the front and rear bearings 50, 60.

As described above, with the spindle device 10 of the built-in motor type according to this embodiment, since the carbon fiber composite material 93 having the lower heat transfer coefficient than the rotary shaft 12 is provided between the front and rear bearings 50, 60, on the inner peripheral surface of the rotary shaft 12, and the outer peripheral surface of the rotor 20 at the position spaced apart from the fitting position where the rotor 20 is fitted, the heat transferred from the rotor 20 to the rotary shaft 12 is hardly transferred to the inner rings 52, 62 of the front and rear bearings 50, 60, thereby suppressing the temperature difference between the inner and outer rings 51, 52, 61, 62 and thus maintaining the appropriate preload. Further, it is possible to prevent the bearings 50, 60 from being seized. In addition, since the carbon fiber composite material 93 integrally engaged with the both annular grooves 96 and 97 has the same strength as the metal, the strength of the rotary shaft 12 is not deteriorated.

In this embodiment, the rotor 20 may be fitted onto the rotary shaft 12 through the rotor sleeve. In the embodiment illustrated in FIG. 10, the outer peripheral annular grooves 96 and the inner peripheral annular grooves 97 have the substantially equal width, and are formed at the same position in the axial direction, but the present invention is not limited thereto. That is, the carbon fiber composite material 93 may be disposed between the front and rear bearings 50, 60, and may be disposed at least one position on the inner peripheral surface of the rotary shaft 12 and the outer peripheral surface of the rotary shaft 12 spaced apart from the fitting position where the rotor 20 or the rotor sleeve is fitted.

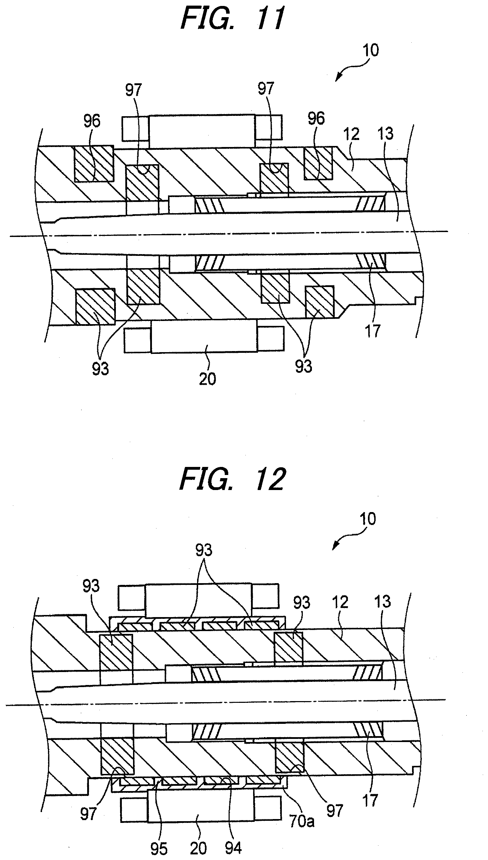

For example, FIG. 11 is a cross-sectional view illustrating major parts of the spindle device according to a modification of the fifth embodiment. The inner peripheral annular groove 97 of the rotary shaft 12 is disposed at a position which is overlapped with the rotor 20 in the axial direction. The inner peripheral annular groove 97 is formed to overlap with the outer peripheral annular grooves 96, which are formed at both axial ends of the rotor 20, in a diameter direction.

Since the carbon fiber composite material 93 having the low heat transfer coefficient is integrally engaged with the rotary shaft 12 in the outer peripheral annular grooves 96 and the inner peripheral annular grooves 97 by the interference fit, the adhesion or the integral forming, the heat conductive area between the front bearing 50 and the rear bearing 60 becomes small, thereby effectively suppressing the increase in temperature of the inner rings 52, 62 of the front and rear bearings 50, 60.

The combination of the fourth embodiment and the fifth embodiment can be applied. For example, as illustrated in FIG. 12, the rotor sleeve 70a including the carbon fiber composite material 93 disposed in the annular groove 94 in the ring shape is fitted onto the outer peripheral surface of the rotary shaft 12, the annular groove 94 being provided on the inner peripheral surface, like the modification of the fourth embodiment. Further, the carbon fiber composite material 93 is disposed in the inner peripheral annular grooves 97 formed on the rotary shaft 12 to be overlapped with the rotor sleeve 70a in the axial direction.

Therefore, in the spindle device 10 of this modification, the heat conductive area on the fitting portion between the rotor sleeve 70a and the rotary shaft 12, and on the rotary shaft between the front bearing 50 and the rear bearing 60 is decreased by the carbon fiber composite material 93 provided on the rotor sleeve 70a and the rotary shaft 12, thereby suppressing the increase in temperature of the inner rings 52, 62 of the front and rear bearings 50, 60.

**Embodiment 6**

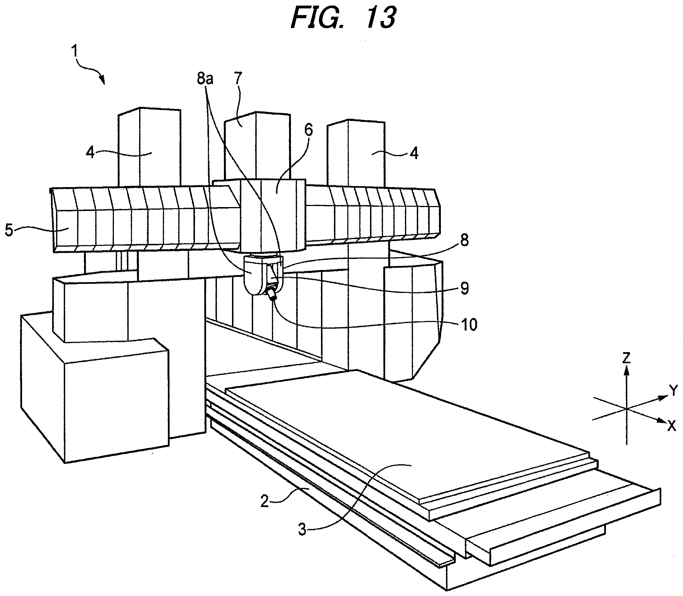

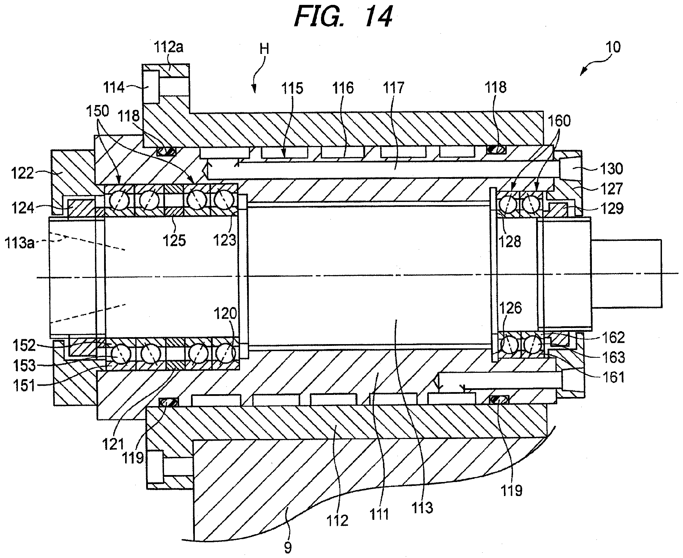

Next, a spindle device according to the sixth embodiment will be described in detail with reference to FIGs. 13 and 14. FIG. 13 is a schematic view of a double column type machining center to which the spindle device according to this embodiment is applied. FIG. 14 is a cross-sectional view of the spindle device in FIG. 13. As illustrated in FIG. 13, a double column type machining center 1 includes a table 3 supported on a bead 2 to be movable in an X-axis direction, and a pair of columns 4 stood on both sides of the bed 2. A cross rail 5 is disposed between upper ends of the columns 4, and a saddle 6 is installed on the cross rail 5 to be movable in a Y-axis direction. Further, a ram 7 being movable up and down in a Z-axis direction is supported by the saddle 6, and a spindle head 8 holding the spindle device 10 so that the spindle device is driven to index the rotation around the Y-axis direction and the Z-axis direction is mounted on a lower end of the ram 7. A tilting mechanism (not illustrated) is installed in two support arms 8a of the spindle head 8, and the spindle device 10 is rotation-index around the Y-axis through the bracket 9 by the tilting mechanism.

As illustrated in FIG. 14, the spindle device 10 includes a housing H fitted in the bracket 9, a rotary shaft 113 inserted in the housing 113, and front and rear bearings 150 and 160 supporting the rotary shaft 113 so that the rotary shaft rotates with respect to the housing H.

The rotary shaft 113 is formed in a hollow shape, and a draw bar extended in the axial direction, a collect installed at a front end of the draw bar, and a disc spring installed between the draw bar and the rotary shaft 113 to draw the collet to the side opposite to the tool side, which are not illustrated, are inserted in the inside of the rotary shaft. Therefore, as the tool holder mounted on the collet is drawn to the side opposite to the tool side (right side in FIG. 14), the tool fitted to a tapered surface 113a formed on the tool-side inner peripheral surface of the rotary shaft 113 is attached to the rotary shaft 113.

Further, the rotary shaft 12 is rotatably supported in the housing H by front bearings 150 of four rows supporting a tool side (left side in FIG. 14) and rear bearings 160 of two rows supporting a side opposite to the tool side. The housing H includes an inner sleeve 111 made of metal which is fitted onto a plurality of front bearings 150 and a plurality of rear bearings 160, and an outer sleeve 112 made of carbon fiber composite material and fitted onto the inner sleeve 111. The outer sleeve 112 is fitted onto the inner sleeve 111 by combination of a tight fit, an interference fit, and adhesion.

The outer sleeve 112 is fixed to the bracket 9 of the spindle head 8, which becomes a machine side, by inserting a bolt (not illustrated) into a screwed hole 114 of a flange portion 112a which is installed at an axial end thereof.

The fitting portion between the inner sleeve 111 and the outer sleeve 112, more specifically, the outer peripheral surface of the inner sleeve 111, is provided with a cooling groove 116 of a spiral shape to form a coolant supply passage 115 through which a coolant is circulated and supplied. The coolant groove 116 has both axial ends which are communicated with a supply hole 117 extending in the axial direction at the inner diameter side rather than the cooling groove 116. The supply hole 117 is communicated with a coolant supply/discharge port 130 formed in a rear bearing outer ring holder 127 which will be described later. The coolant supply/discharge port 130 is connected to a coolant supply device (not illustrated) via a pipe, so that the coolant such as cooling water is circulated and supplied to the coolant supply passage 115 via the supply hole 117 to cool the inner sleeve 111.

O-ring groove 118 is formed on both axial ends of the outer peripheral surface of the inner sleeve 111. Both axial sides of the coolant supply passage 115 are sealed by an O-ring 119 from the outside to prevent leakage of the coolant.

Each front bearing 150 is an angular ball bearing having an outer ring 151, an inner ring 152, balls 153 as rolling elements disposed with a contact angle, and a retainer (not illustrated), and each rear bearing 160 is an angular ball bearing including an outer ring 161, an inner ring 162, balls 163 as rolling elements, and a retainer (not illustrated).

The front bearings 150 of four rows are arranged so that each front bearings 150 of two rows are combined in parallel from the axial front (left side in the drawing) to form one pair, and each pair is arranged in a back-to-back relation with each other. Also, the rear bearings 160 of two rows are arranged in a back-to-back relation with each other.

The outer ring 151 of each front bearing 150 is fitted in the inner sleeve 111, to abut against a stepped portion 120 formed on the inner sleeve 111 at the side opposite to the tool side rather than the outer rings 51, and to be positioned in the axial direction via the outer ring spacer 121 by a rear bearing outer ring holder 122 which is fastened to the axial front end of the inner sleeve 111. Further, the inner ring 152 of each front bearing 150 is fitted onto the rotary shaft 113, to abut against a stepped portion 123 formed on the inner sleeve 113 at the side opposite to the tool side rather than the inner rings 152, and to be positioned in the axial direction via the inner ring spacer 125 by a nut 124 fastened to the rotary shaft 113.

The outer ring 161 of each rear bearing 160 is fitted in the inner sleeve 111, so that an axial gap is formed between the outer ring 161 and a stepped portion 126 formed at the inner sleeve at the tool side rather than the outer rings 161, and between the outer ring 111 and the rear bearing outer ring holder 127 fastened to the axial rear end of the inner sleeve 111. According to the configuration of which the outer ring 161 of the rear bearing 160 is not fixed in the axial direction, the thermal expansion difference between the rotary shaft 113 and the housing H can be free. Further, the inner ring 162 of each rear bearing 160 is fitted onto the rotary shaft 113, to abut against a stepped portion 128 formed on the rotary shaft 113 at the tool side rather than the inner rings 162 thereof, and to be positioned in the axial direction by a nut 129 fastened to the rotary shaft 113.

The spindle device 10 configured as described above is fixed to the bracket 9 of the machine side via the outer sleeve 112 made of the carbon fiber composite material having the thermal conductivity lower than that of the metal. Therefore, the heat generated from the spindle device 10 side is hardly to be transferred to the bracket 9 of the machine side, thereby suppressing the thermal deformation of the machine side and thus performing the machining with the high precision. In particular, in the spindle device 10 of the built-in motor type built with a driving motor therein, since the heat generated from the rotor and the stator is hardly to be transferred to the machine side, the effect of the present invention is large.

Further, since the outer sleeve 112 having a relatively large volume is made of the carbon fiber composite material having the low specific gravity, the mass of the spindle device 10 is decreased. Accordingly, the inertia of a feed shaft mounted with the spindle device 10 is decreased, thereby increasing the moving acceleration of the spindle device 10. Therefore, it is possible to shorten a tool replacing time and the moving time of the spindle device 10 on the portion to be process, and to increase the actual machining time, thereby improving the machining efficiency. Even in a machining apparatus of a spindle device swing type, since the inertia of the spindle device 10 is similarly decreased, the swing acceleration can be improved to perform the machining with the high efficiency.

For example, a chatter mark may be formed when a machining time of a difficult-to-machine material, such as titanium, or a sharpness of an edge is decreased.

However, since the carbon fiber composite material has the good vibration damping characteristic, the vibration of the spindle device 10 side is hardly to be transferred to the bracket 9 of the machine side, and a resonance phenomenon is prevented, so that the high machining precision is maintained.

As described above, according to the spindle device 10 of this embodiment, since the housing H provided with the front and rear bearings 150 and 160 rotatably supporting the rotary shaft 113 includes at least the inner sleeve 111 made of metal which is fitted onto the rear bearing 160, and the outer sleeve 112 made of the carbon fiber composite material which is fitted onto the inner sleeve 111, the heat from the rotary shaft 113 is hardly to be transferred to the bracket 9 of the machine side by the action of the outer sleeve 112 made of the carbon fiber composite material h having the low thermal conductivity, thereby suppressing the thermal deformation of the machine side which is caused by the increase in temperature and thus performing the machining with the high precision. In particular, the spindle device 10 of the built-in motor type built with the driving motor therein is effective since the heat generated from the rotor is hardly to be transferred to the machine side. Further, since the carbon fiber composite material has the low specific gravity, the mass and the inertia of the spindle device 10 can be decreased to move in a high speed than relative to the spindle head, thereby improving the yield.

According to the spindle device 10 of this embodiment, since the fitting portion between the inner sleeve 111 and the outer sleeve 112 is provided with the coolant supply passage 115 for circulating and supplying the coolant, the inner sleeve 111 can be effectively cooled by the coolant, thereby suppressing the increase in temperature of the machine side in cooperation with the low thermal conductivity characteristic of the carbon fiber composite material. Therefore, it is possible to suppress the thermal deformation which is caused by the increase in temperature of the machine side, thereby performing the machining with high precision.

Further, according to the spindle device 10 of this embodiment, since the O-ring 119 sealing the coolant supply passage 115 from the outside is disposed at both axial ends of the fitting portion between the inner sleeve 111 and the outer sleeve 112, it is possible to positively prevent the leakage of the coolant from the coolant supply passage 115.

**Embodiment 7**

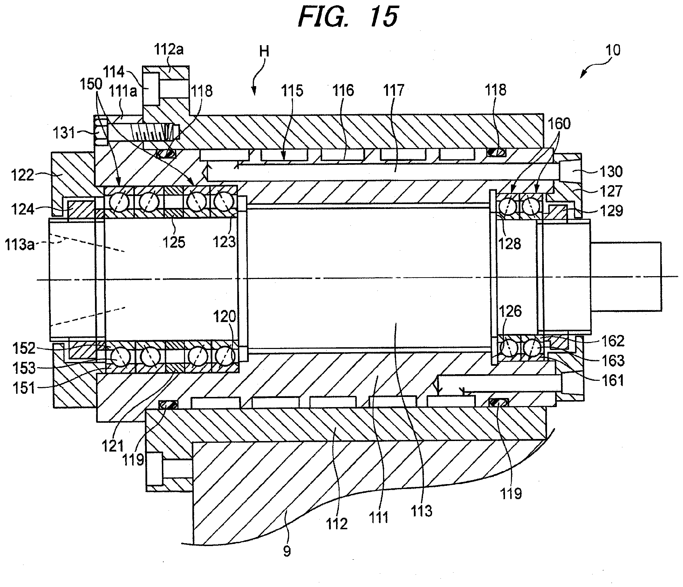

Next, the spindle device of the seventh embodiment will be described with reference to Fig. 15. The basic configuration of the spindle device 10 of the seventh embodiment is substantially similar to the spindle device 10 of the sixth embodiment, except for that the inner sleeve 111 and the outer sleeve 112 are engaged with a clearance fit, and the inner sleeve 111 is fastened to the outer sleeve 112 by a bolt 131 at a flange portion 111a formed at the axial front end thereof.

If the temperature of the spindle device 10 is raised, the inner sleeve 111 made of the metal is thermally expanded in the diameter direction. Meanwhile, the outer sleeve 112 made of the carbon fiber composite material is hardly to expand as compared with the inner sleeve 111. As a result, the inner sleeve 111 is pressed from the outside, and thus it may affect the front and rear bearings 150 and 160 fitted in the inner sleeve 111. However, in the spindle device 10 of this embodiment, since the inner sleeve 111 and the outer sleeve 112 are fitted with an appropriate clearance, it is possible to prevent the outer sleeve 112 from pressing the inner sleeve 111, thereby decreasing the fitting clearance between the front and rear bearings 150 and 160 of the inner sleeve 111 and thus decreasing the effect on the internal load of the bearings 150 and 160. The other operation effects are similar to those of the spindle device 10 of the sixth embodiment.

**Embodiment 8**

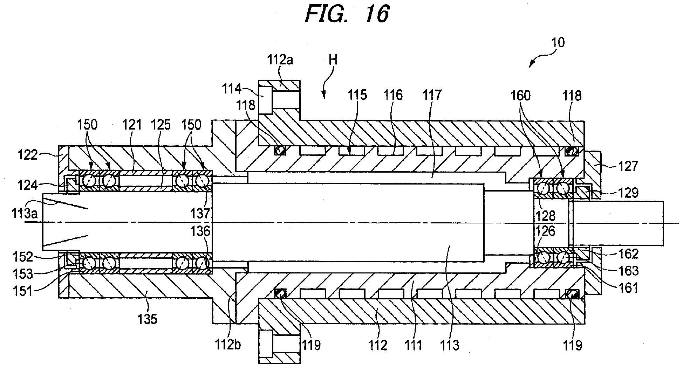

Next, a spindle device according to the eighth embodiment will be described with reference to FIG. 16. Since the basic configuration of the spindle device 10 according to the eighth embodiment is substantially similar to the spindle device of the sixth embodiment, the same or similar parts as those of the sixth embodiment are indicated by the same reference numerals, and the description thereof will be omitted or simplified. The different portion between the embodiments will be described in detail.

The housing H of the spindle device 10 of this embodiment includes the inner sleeve 111, the outer sleeve 112, and a front bearing housing 135. The front bearing housing 135 is made of metal, and is fixed to an end face 112b of the inner sleeve 111 at the axial front. The front bearing housing is disposed at the front of the inner sleeve 111 and the outer sleeve 112 in the axial direction. In other words, the front bearing housing 135 is configured not to be fitted in the outer sleeve 112.

The front bearings 150 of four rows are disposed to be fitted in the front bearing housing 135, and rotatably support the rotary shaft 113 in cooperation with the rear bearings 160 of two rows which are disposed at the side opposite to the tool side of the inner sleeve 111. The outer ring 151 of each front bearing 150 is fitted in the front bearing housing 135, to abut against a stepped portion 136 formed on the front bearing housing 135 at the side opposite to the tool side rather than the outer rings 151, and to be positioned in the axial direction via the outer ring spacer 121 by the rear bearing outer ring holder 122 which is fastened to the axial front end of the front bearing housing 135. Further, the inner ring 152 of each front bearing 150 is fitted onto the rotary shaft 113, to abut against a stepped portion 137 formed on the rotary shaft 113 at the side opposite to the tool side rather than the inner rings 152, and to be positioned in the axial direction via the inner ring spacer 125 by the nut 124 fastened to the rotary shaft 113.

In the case where the inner sleeve 111 made of metal is fitted onto each front bearing 150 and the outer sleeve 112 made of the carbon fiber composite material is fitted onto the inner sleeve 111, when the temperature of the spindle device 10 is raised, the inner sleeve 111, the rotary shaft 113, the outer ring 151 and the inner ring 152 which are made of the metal are thermally expanded in the diameter direction. Meanwhile, the outer sleeve 112 made of the carbon fiber composite material is hardly to expand, so that the inner sleeve 111 is pressed from the outside by the outer sleeve 112, and thus the outer ring 151 is contracted. As a result, the internal load of the front bearing 150 may be increased. There is no problem at the time of relatively low-speed rotation, but, for example, the internal load is increased by the centrifugal force of the balls 153 at the time of the high-speed rotation having the dmn value of 1 million or above. Therefore, rolling frictional torque of the bearing 150 is increased to generate a lot of heat, thereby probably restricting the number of revolutions.

In particular, since the front bearing 150 disposed at the tool side is a bearing on which a cutting load is loaded, it should be set to have a large inner diameter, as compared with the rear bearing 160, to secure the rigidity. Further, since the tool side of the spindle device 10 is provided with the tapered surface 113a for holding the tool, a thickness is required to secure the shaft rigidity and the natural frequency of the shaft system, and thus the inner diameter of the front bearing 150 is increased. Accordingly, the dmn value of the front bearing 150 tends to increase as compared with the rear bearing 160.

By contrast, in the spindle device 10 of this embodiment, since the outer sleeve 112 made of the carbon fiber composite material is not fitted onto the front bearing housing 135 in which each front bearing 150 is fitted, there is no pressing action from the outside. Even at the time of the high-speed rotation, it is possible to suppress the internal load of the front bearing 150 from being increased, thereby preventing occurrence of the problem such as seizing.

Further, the front bearing housing 135 is fixed to the inner sleeve 111 made of the metal material, and there is no fitting portion with the outer sleeve 112 made of the carbon fiber composite material which is difficult to select an appropriate fit. Therefore, its design is easy.

As described above, according to the spindle device 10 of this embodiment, since the housing H further includes the front bearing housing 135 at the front of the inner sleeve 111 and the outer sleeve 112 in the axial direction, the thermal expansion of the front bearing housing 135 is not restricted by the outer sleeve 112 made of the carbon fiber composite material, thereby suppressing an adverse influence from being exerted the front bearing 150 which is fitted in the front bearing housing 135.

The sixth to eighth embodiments can be applied to the spindle device of the built-in motor type built with the driving motor therein.

### Embodiment 9

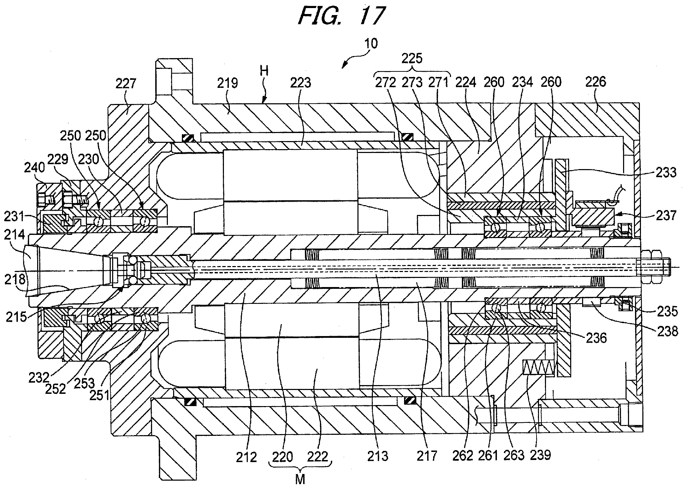

Next, a spindle device of the ninth embodiment of the present invention will be described with reference to FIG. 17. As illustrated in FIG. 17, the spindle device 10 is a built-in motor type, and includes a hollow rotary shaft 212 installed in a center portion in an axial direction thereof, and a draw bar 213 slidably inserted and fitted in a shaft core of the rotary shaft 212. The draw bar 213 presses a collet portion 215 fixing a tool holder 214 in a direction (direction toward a right side in the drawing) opposite to a tool side by a biasing force of a disc spring 217, and the tool holder 214 is fitted on a tapered surface 218 of the rotary shaft 212. A tool (not illustrated) is attached to the tool holder 214, and thus the rotary shaft 212 is clamped to the tool at one end thereof, so that the tool can be attached.

Further, the rotary shaft 212 is rotatably supported in a housing H by front bearings (fixed-side bearing) 250, 250 of two rows supporting a tool side and rear bearings (free-side bearing) 260, 260 of two rows supporting a side opposite to the tool side. The housing H includes a front cover 240, a front bearing outer ring holder 229, a front housing 227, an outer cylinder 219, a rear housing 224 and a rear cover 226 in order from the tool side.

A rotor 220 is fitted on an outer peripheral surface of the rotary shaft 212, which is interposed between the front bearings 250, 250 and the rear bearings 260, 260, by a shrink fit. A stator 222 disposed around the rotor 20 is fixed to the outer cylinder 219 by fitting a cooling jacket 223, which is shrink-fitted in the stator 222, in the outer cylinder 219 configuring the housing H. Accordingly, the rotor 220 and the stator 222 configure a motor M, and torque is generated from the rotor 20 by supplying electricity to the stator 222, thereby rotating the rotary shaft 212.

Each front bearing 250 is an angular ball bearing including an outer ring 251, an inner ring 252, balls 253 as rolling elements disposed with a contact angle, and a retainer (not illustrated), and each rear bearing 260 is an angular ball bearing including an outer ring 261, an inner ring 262, balls 263 as rolling elements, and a retainer (not illustrated).

The outer rings 251, 251 of the front bearings 250, 250 are fitted in the front housing 227, and are positioned and fixed, relative to the front housing 227 in an axial direction, via an outer ring spacer 230 by the front bearing outer ring holder 229 which is fastened to the front housing 227 by a bolt. Further, the inner rings 252, 252 of the front bearings 250, 250 are fitted onto the rotary shaft 212, and are positioned and fixed, relative to the rotary shaft 212 in the axial direction, via the inner ring spacer 232 by a nut 231 fastened to the rotary shaft 212.

The outer rings 261, 261 of the rear bearings 260, 260 are fitted in a bearing sleeve 225, which is freely slid in the axial direction relative to the rear housing 224, in the rear housing 224. One end faces of the outer rings 261, 261 come into contact with a rear bearing outer ring holder 233 which is fastened to the bearing sleeve 225 by a bolt, and the outer rings 261, 261 are positioned and fixed, relative to the bearing sleeve 225 in an axial direction, via an outer ring spacer 234. The inner rings 262, 262 of the rear bearings 260, 260 are fitted onto the rotary shaft 212, and are positioned and fixed by another nut 235, which is fastened to the rotary shaft 212, via the inner ring spacer 36 and a section to be detected 238 of a speed sensor 237.

The front bearings 250, 250 (tandem arrangement) and the rear bearings 260, 260 (tandem arrangement) are cooperatively arranged in a back-to-back relation with each other, and are configured to be imparted with a fixed positional load. A biasing member 239, such as a spring, is disposed between the rear housing 224 and the rear bearing outer ring holder 233, and the rear bearing outer ring holder 233 and the bearing sleeve 225 are able to be slid in the axial direction with respect to the rear housing 224.

The bearing sleeve 225 includes an annular outer metal member 271 disposed at an outer diameter side thereof and having an outer peripheral surface fitted to the rear housing 224, an annular inner metal member 272 disposed at an inner diameter side thereof and having an inner peripheral surface fitted to the outer rings 261, 261, and an annular carbon fiber composite material (CFRP) 273 disposed between the outer metal member 271 and the inner metal member 272. Each of the outer metal member 271, the inner metal member 272 and the carbon fiber composite material 273 has the same axial length as that of each bearing sleeve 225, and the bearing sleeve 225 has a radial multiple-layered structure.

As the outer and inner metal members 271, 272, a metal material such as carbon steel, SCM material, or cast iron is used. The carbon fiber composite material 273 uses one having high specific elastic modulus, low specific gravity, and low thermal expansion coefficient, relative to the metal material forming the outer and inner metal members 271, 272. In particular, since the specific elastic modulus of the carbon fiber composite material is preferably set to be two times or above as large as that of the used metal material, more preferably, three times or above, to cope with the thermal expansion of the outer an dinner metal members 271, 272 forming the bearing sleeve 225. The carbon fiber composite material is anisotropic in a fiber direction, but the fiber direction is determined according to a load direction at forming. Further, isotropy may be used by crossing the fiber direction. The fiber direction may be determined to increase specific elastic modulus in a circumferential direction.

For example, the carbon fiber composite material 273 is fabricated by layering a sheet on each other in multiple layers, winding the multiple-layered sheet around a core, and thermally curing the sheet, in which the sheet is manufactured by impregnating a fabric (sheet type) made of threads pulled in parallel and made of carbon fiber containing PAN (polyacrylonitrile) as a major component, or threads made of carbon fiber into thermosetting resin, such as epoxy resin, containing a curing agent.

As characteristics of the carbon fiber composite material 273, for example, a carbon fiber type which is commercially available from Toho Tenax Co., Ltd. has tensile strength of 2060 MPa, tensile elasticity of 137 GPa, and specific gravity of 1.55 g/cc, when HTA is used, and, as compared with high tensile steel, the tensile strength is equal to or more than that, and the specific gravity is about 1/5 times as large as that. Further, since the thermal expansion coefficient can be set as -5 to +5° $\times$ $10^{-6}$ °C by optimizing a direction and angle of the fiber, it can be set as about 1/2 to 1/10, as compared with the conventional carbon steel. Assuming the difference in radial expansion amounts between the bearing sleeve 225 and the housing 224 which is caused by the temperature difference, the direction or angle of the fiber may be optimized to have the appropriate thermal expansion coefficient so that the gap therebetween is not decreased.

The method of engaging the carbon fiber composite material 273 and the outer and inner metal members 271, 272 may be carried out by engaging parts formed separately with an interference fit or adhesion, or by integrally forming them.

In this way, since the outside of the inner metal member 272 is provided with the carbon fiber composite material 273, the expansion of the inner metal member 272 can be suppressed by the carbon fiber composite material 273 from the outside. Accordingly, it is possible to suppress the gap between the rear housing 224 and the bearing sleeve 225 from being decreased due to that the outer diameter of the bearing sleeve 225 is expanded.

Since the material having the low heat transfer coefficient, such as carbon fiber composite material 273, is used, the heat of the bearing is hardly to be transferred to the outer member than the carbon fiber composite material 273. Therefore, the temperature of the rear housing 224 is hardly to be raised, thereby preventing the machining precision from being deteriorated due to thermal displacement of the spindle. Further, since the temperature of the outer metal member 271 located at the outside of the carbon fiber composite material 273, the gap is hardly to be decreased as large as that.

The inner metal member 272 preferably uses a low-expansion cast iron member, such as Nobinite, having a linear expansion coefficient similar to the carbon fiber composite material to suppress the decrease in gap between the rear housing 224 and the bearing sleeve 225, but only the material having the same linear expansion coefficient as that of the rear housing 224 shows the effect by the pressing-down action of the carbon fiber composite material 273. Further, as the thickness of the carbon fiber composite material 273 is thickened relative to the inner metal member 272, the pressing-down action is preferably improved.

In this embodiment, the rear bearing outer ring holder 233 having high heat capacity and being not in directly contact with the rear housing 224 is engaged with the outer rings 261, 261, thereby escaping the heat to the rear bearing outer ring holder 233 side. As a result, an initial gap of the sliding portion between the rear housing 224 and the bearing sleeve 225 can be shortened, thereby reducing the vibration at the time of the low speed (low heat generation) while maintaining the slidability. Further, it is possible to suppress the outer diameter of the bearing sleeve from being expanded due to the heat generation at the time of the high-speed rotation, thereby suppressing the reduction in gap and thus preventing sliding failure of the bearing sleeve. Also, the carbon fiber composite material has the good damping characteristic against vibration to suppress the vibration.

In the ninth embodiment, the bearing sleeve 225 can be constituted of any one of the combination the outer metal member 271 and the carbon fiber composite material 273, the combination of the carbon fiber composite material 273 and the inner metal member 272, and only the carbon fiber composite material 273. In particular, the outer peripheral surface of the bearing sleeve 225 may be constituted of the outer metal member 271, or may be constituted of the carbon fiber composite material 273, if it satisfies the slidability with the rear housing 224. Further, the outer peripheral surface of the carbon fiber composite material may be coated by a metal or be sprayed by ceramic.

**Embodiment 10**

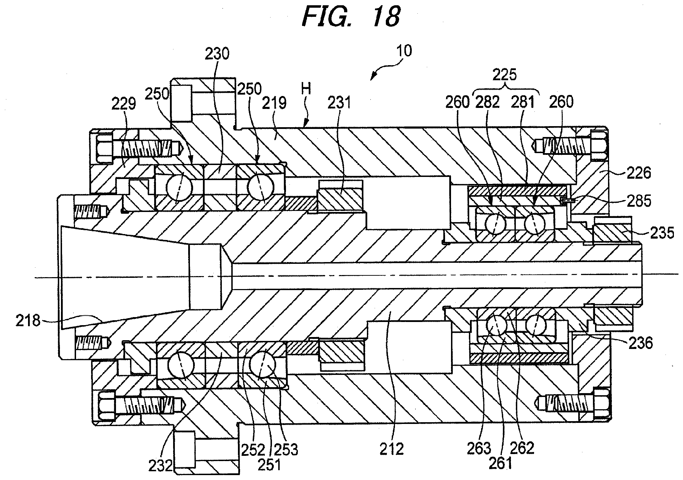

Next, a spindle device according to the tenth embodiment of the present invention will be described in detail with reference to FIG. 18. Further, the same or similar parts as those of the ninth embodiment are indicated by the same reference numerals, and the description thereof will be omitted or simplified.

In this embodiment, the rotary shaft 212 is rotatably supported in a housing H by front bearings (fixed-side bearing) 250, 250 of two rows supporting a tool side and rear bearings (free-side bearing) 260, 260 of two rows supporting a side opposite to the tool side. The rotary shaft 212 is driven by a driving force from the outside. The housing H includes a front bearing outer ring holder 229, an outer cylinder 219, and a rear cover 226 in order from the tool side.

The front bearings 250, 250 and the rear bearings 260, 260 are arranged in a back-to-back relation with each other, and are configured to be imparted with a fixed positional load. The front bearings 250, 250 are fitted in the outer cylinder 219, and is positioned and fixed, relative to the outer cylinder 219 in an axial direction, via an outer ring spacer 230 by the front bearing outer ring holder 229 which is fastened to the outer cylinder 230 by a bolt. Further, the inner rings 252, 252 of the front bearings 250, 250 are fitted onto the rotary shaft 212, and are positioned and fixed, relative to the rotary shaft 212 in the axial direction, via the inner ring spacer 232 by a nut 231 fastened to the rotary shaft 212.

The outer rings 261, 261 of the rear bearings 260, 260 are fitted in the bearing sleeve 225 in the slidable state in the axial direction relative to the outer cylinder 219, and are positioned and fixed in the axial direction relative to the bearing sleeve 225. The inner rings 262, 262 of the rear bearings 260, 260 are fitted onto the rotary shaft 212, and is positioned and fixed in the axial direction via the inner ring 236.

The bearing sleeve 225 is configured in a radial multiple-layered structure including an annular carbon fiber composite material (CFRP) 281 disposed at the outer diameter side thereof and having an outer peripheral surface fitted to the outer cylinder 219, and an annular inner metal member 282 disposed in the carbon fiber composite material 281 and having an inner peripheral surface fitted to the outer rings 261, 261. The carbon fiber composite material 281 and the inner metal member 282 are joined to each other by adhesion or a shrink fit. Further, finishing on the outer peripheral surface of the carbon fiber composite material 281 is preferably performed after being joined to the inner metal member 282.

Further, the bearing sleeve 225 is provided with a rotation stopper 285 to prevent circumferential sliding between the housing 219 and the bearing sleeve 225 due to the increase in frictional torque of the rolling bearing 260 at the acceleration or deceleration.

In this way, as the outside of the bearing sleeve 225 is formed of the carbon fiber composite material 281 and the inside is formed of the inner metal member 282, the expansion of the inner metal member 282 is pressed down by the carbon fiber composite material 281 to suppress the gap between the outer cylinder 219 and the bearing sleeve 225 from being reduced. Further, since the thermal expansion coefficient is given by (thermal expansion amount = linear expansion coefficient x length (in this instance, diameter) x increased temperature), it is possible to effectively suppress the expansion of the bearing sleeve 225 by disposing the carbon fiber composite material 281 on the large-diameter outside of the bearing sleeve 225.

**Embodiment 11**

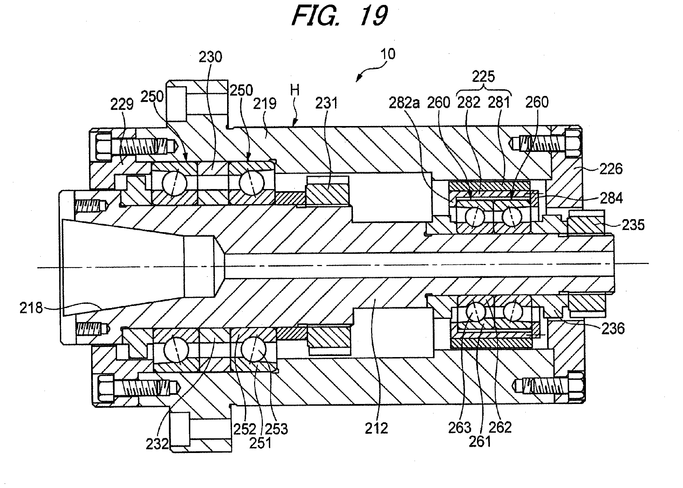

FIG. 19 is a cross-sectional view of a spindle device 10 according to an eleventh embodiment of the present invention. In this embodiment, the inner peripheral surface of the bearing sleeve 225, that is, the inner peripheral surface of the inner metal member 282, and the outer rings 261, 261 of the rear bearings 260, 260 are fitted with clearance.

The gap between the bearing sleeve 225 and the outer rings 261, 261 is set to be larger than the radial expansion of the outer rings 261, 261 which is caused by the centrifugal force action of the balls 263, 263 when the bearings 260, 260 are rotated at a high speed, so that the increase in internal preload which is caused by the centrifugal force can be alleviated by the expansion of the outer rings.

In the case where the bearing sleeve 225 and the outer rings 261, 261 are fitted to each other with clearance, both end faces of the outer rings 261, 261 are pressed by a shoulder portion 282a of the inner metal member 282 and the outer ring holder 284 fastened to the inner metal member 282 by a bolt, so that the outer rings 261, 261 are not slid in a circumferential direction in the bearing sleeve 225. Further, it is possible to prevent the vibration of the bearings 260, 260 which is concerned about the clearance fit, by pressing both end faces of the outer rings 261, 261. Other configuration and operation are similar to those of the tenth embodiment.

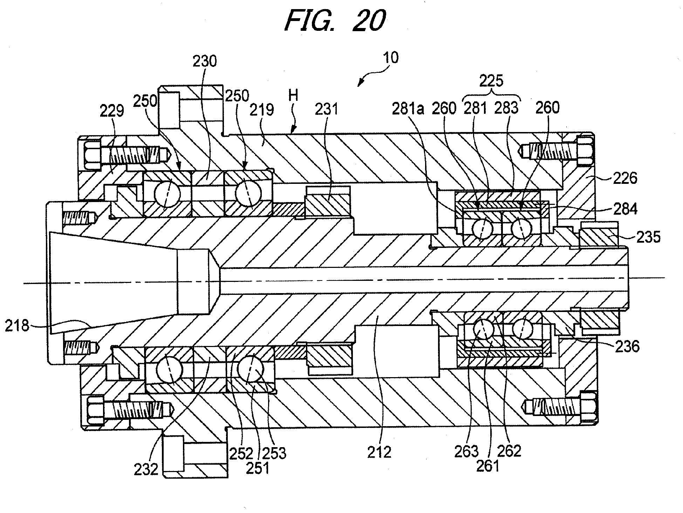

FIG. 20 is a cross-sectional view of a spindle device 10 according to a first modification of the eleventh embodiment of the present invention. The configuration of the bearing sleeve 225 according to the modification is different from that of the eleventh embodiment. That is, the bearing sleeve 225 includes an annular outer metal member 283 disposed at the outer diameter side thereof and having an outer peripheral surface fitted to the outer cylinder 219, and a carbon fiber composite material (CFRP) 281 disposed in the outer metal member 283 and having an inner peripheral surface fitted to the outer rings 261, 261 with clearance.

In this instance, the gap between the bearing sleeve 225 and the outer rings 261, 261 is set to be larger than the radial expansion of the outer rings 261, 261 which is caused by the centrifugal force action of the balls 263, 263 when the bearings 260, 260 are rotated at a high speed, so that the expansion of the outer ring which alleviates the increase in internal preload which is caused by the centrifugal force is allowed. Accordingly, the inner peripheral surface of the bearing sleeve 225 may be constituted of the carbon fiber composite material 281, similar to the modification. Also, in this instance, both end faces of the outer rings 261, 261 are pressed by a shoulder portion 281a of the carbon fiber composite material 281, and an outer ring holder 284 fastened to the bearing sleeve 225 by a bolt.

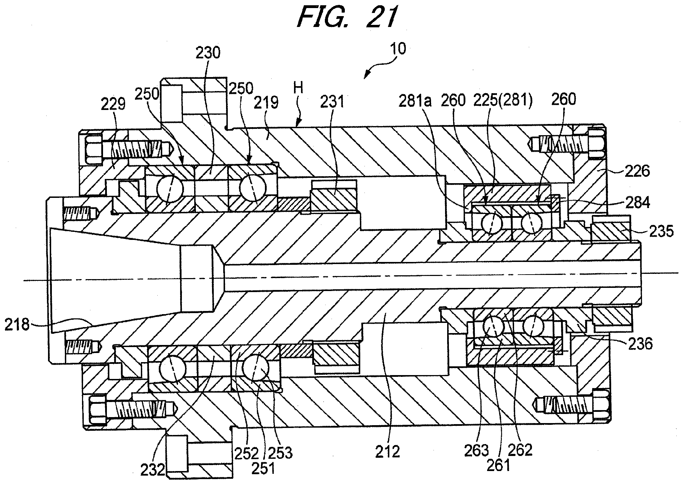

FIG. 21 is a cross-sectional view of a spindle device 10 according to a second modification of the eleventh embodiment. In this modification, the whole bearing sleeve 225 is formed by the carbon fiber composite material 281.

In this instance, the gap between the bearing sleeve 225 and the outer rings 261, 261 is set to be larger than the radial expansion of the outer rings 261, 261 which is caused by the centrifugal force action of the balls 263, 263 when the bearings 260, 260 are rotated at a high speed, so that the expansion of the outer rings which alleviates the increase in internal preload which is caused by the centrifugal force is allowed.

**Embodiment 12**

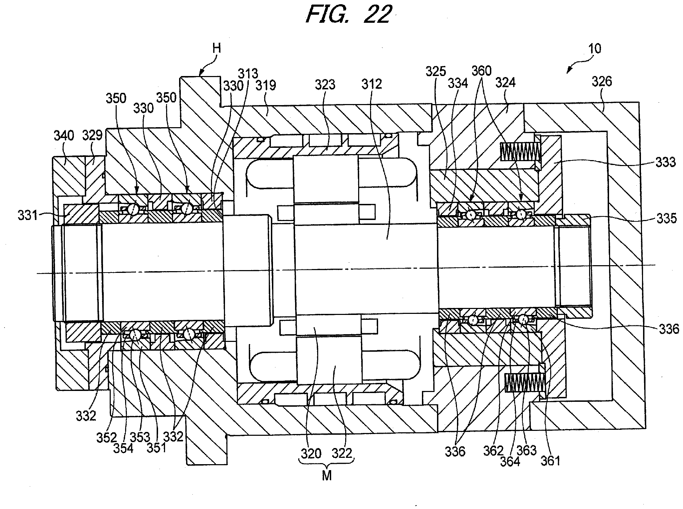

A spindle device according to the twelfth embodiment will be described with reference to FIG. 22. As illustrated in FIG. 22, a spindle device 10 of the twelfth embodiment includes a hollow rotary shaft 312 made of a metal material, more specifically, a chrome molybdenum material (SCM material), installed in a center portion in an axial direction thereof, and a draw bar (not illustrated) slidably inserted in a shaft core of the rotary shaft 312. The draw bar presses a collet portion fixing a tool holder in a direction (a right direction in the drawing) opposite to the tool side by a biasing force of a disc spring, which are not illustrated in the drawing, and the tool holder is fitted on a tapered surface of the rotary shaft 312. Therefore, the rotary shaft 312 is clamped to the tool at one end (left in the drawing) thereof, so that the tool can be attached.

The rotary shaft 312 is rotatably supported in a housing H by front bearings 350, 350 of two rows supporting the tool side and rear bearings 360, 360 of two rows supporting a side opposite to the tool side. The housing H includes a front cover 340, a front bearing outer ring holder 329, an outer cylinder 319, a rear housing 324 and a rear cover 326 in order from the tool side.

A rotor 320 is fitted on an outer peripheral surface of the rotary shaft 312, which is interposed between the front bearings 350, 350 and the rear bearings 360, 360, by a shrink fit. A stator 322 disposed around the rotor 320 is fixed to the outer cylinder 319 by fitting a cooling jacket 323, which is shrink-fitted in the stator 322, in the outer cylinder 319 configuring the housing H. Accordingly, the rotor 320 and the stator 322 configure a motor M, and torque is generated from the rotor 320 by supplying electricity to the stator 322, thereby rotating the rotary shaft 312.

Each front bearing 350 is an angular ball bearing including an outer ring 351, an inner ring 352, balls 353 as rolling elements disposed with a contact angle, and a retainer 354, and each rear bearing 360 is an angular ball bearing including an outer ring 361, an inner ring 362, balls 363 as rolling elements, and a retainer 364. The front bearings 350, 350 (tandem arrangement) and the rear bearings 360, 360 (tandem arrangement) are cooperatively arranged in a back-to-back relation with each other.

The outer rings 351 and 351 of the front bearings 350, 350 are fitted in the outer cylinder 319, and are positioned and fixed, relative to the outer cylinder 319 in an axial direction, via an outer ring spacer 330 by the front bearing outer ring holder 329 which is fastened to the outer cylinder 319 by a bolt. Further, the inner rings 352 and 352 of the front bearings 350, 350 are fitted onto the rotary shaft 312 with interference of zero or more, and are interposed between the end 313 of the rotary shaft 312 and the nut 331 fastened to the rotary shaft 312 via a plurality of front inner ring spacers 332 to be positioned and fixed relative to the rotary shaft 312.

The outer rings 361 and 361 of the rear bearings 360, 360 are fitted in a bearing sleeve 325, which is freely slid in the axial direction in the rear housing 324, and are positioned and fixed, relative to the bearing sleeve 25 in an axial direction, via an outer ring spacer 334 by a rear bearing outer ring holder 333 which is fastened to the bearing sleeve 325 by a bolt. The inner rings 362 and 362 of the rear bearings 360, 360 are fitted onto the rotary shaft 312 with interference of zero or more, and are positioned and fixed by another nut 335, which is fastened to the rotary shaft 312, via the inner ring spacer 336.

Next, the front and rear race spacers 332, 336 and the inner rings 352, 362 of the front and rear bearings 350, 360 will be described in detail. Further, since the front inner ring spacer 332 and the front bearing 350, and the rear inner ring spacer 336 and the rear bearing 360 have the same configuration, the front inner ring spacer 332 and the front bearing 350 will be described as one example in the following description.

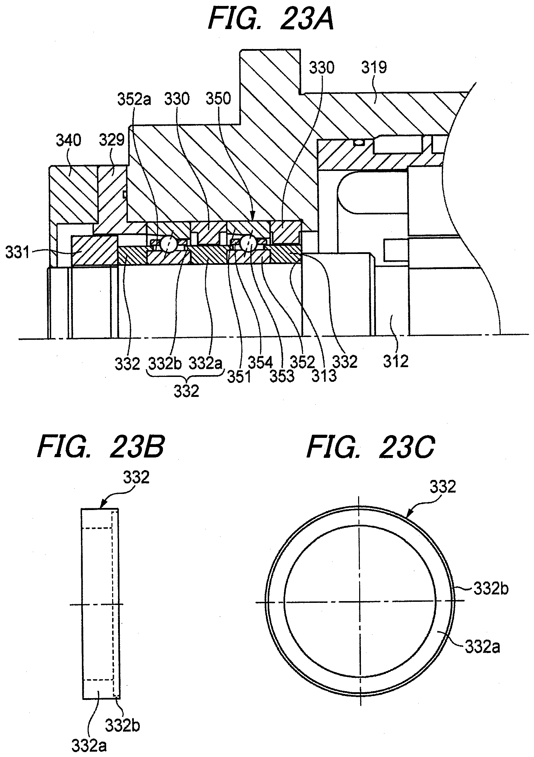

FIG. 23A is an enlarged cross-sectional view illustrating the vicinity of the front bearing 350 of the spindle device 10, FIG. 23B is a side view of the front inner ring spacer 332, and FIG. 23C is a front view of the front inner ring spacer 332. At both opposite sides of each inner ring 352, a pair of front inner ring spacers 332 fitted onto the rotary shaft 312 are disposed to be opposite to each other.

The front inner ring spacer 332 has an annular body portion 332a, and an annular flange-type projection 332b protruding in the axial direction from the outer peripheral side of the body portion 332a to be fitted onto the outer peripheral surface 352a of a shoulder of the inner ring 352, the flange-type project being integrally formed with the body portion 332a. Further, the front inner ring spacer 332 is formed by a material having low thermal expansion coefficient and high specific elastic modulus, relative to the inner ring 352, for example, carbon fiber composite material (CFRP).

The flange-type projection 332b of the front inner ring spacer 332 is fitted onto the outer peripheral surface 352a of the shoulder of the inner ring 352 with the interference of zero or more when assembling, so that the outer peripheral surface 352a of the shoulder of the inner ring 352 is radially inwardly pressed by the flange-type projection 332b over the whole circumference thereof. The fitting between the flange-type projection 332b and the outer peripheral surface 352a of the shoulder of the inner ring 352 with the interference of zero or more is performed in a direction to increase the interference by the difference between both the coefficients of thermal expansion when the temperature is raised according to the operation of the spindle device 10, so that there is not gap between the flange-type projection and the outer peripheral surface to maintain the restriction of the outer peripheral surface 352a of the shoulder of the inner ring 352 by the flange-type projection 332b.

The maximum interference (diameter method) between the flange-type projection 332b of the front inner ring spacer 332 and the outer peripheral surface 352a of the shoulder of the inner ring 352 depends on the shape or thickness of the front inner ring spacer 332 (flange-type projection 332b), but is preferably 60 μm or less, more preferably, 40 μm or less, further more preferably, 20 μm, in view of easy mounting.

The axial width of the flange-type projection 332b and the outer peripheral surface 352a of the shoulder of the inner ring 352 is preferably 10% or above of the axial width of the inner ring 352 to strongly maintain the fitting state therebetween. In this embodiment, since the outer diameter of the flange-type projection 332b is smaller than the inner diameter of the retainer 354, the axial width of the fitting portion between the flange-type projection 332b and the outer peripheral surface 352a of the shoulder of the inner ring 352 can be increased, while the flange-type projection 332b does not interfere the retainer 354.

By the same reason as described above, the fitting between the front inner ring spacer 332 and the rotary shaft 312 and the fitting between the inner ring 352 and the rotary shaft 312 are preferably fitted with interference of zero or more at the time of mounting. Accordingly, the fitting state is maintained even though the temperature is raised, thereby preventing creep therebetween and strongly maintaining the fitting state between the flange-type projection 332b and the outer peripheral surface 352a of the shoulder of the inner ring 352.

Since the front inner ring spacer 332 made of the carbon fiber composite material has high specific elastic modulus, low specific gravity, and low thermal expansion coefficient, relative to the inner ring 352 made of the metal material, the centrifugal force expansion which is caused by the centrifugal force at the operation is reduced, and the thermal expansion amount caused by the raised temperature is also reduced. Accordingly, the flange-type projection 332b presses the outer peripheral surface 352a of the shoulder of the inner ring 352 due to the difference in thermal expansion amounts between the front inner ring spacer 332 and the inner ring 352, thereby effectively suppressing the expansion of the inner ring 352. This contributes to the maintenance of the fitting between the rotary shaft 312 and the inner ring 352. The effect of suppressing the inner ring 352 by the flange-type projection 332b is particularly valid for the spindle device 10 which is rotated at the high speed, such as dmn value of 1 million or above.

For example, the carbon fiber composite material is fabricated by layering a sheet on each other in multiple layers, winding the multiple-layered sheet around a core, and thermally curing the sheet, in which the sheet is manufactured by impregnating a fabric (sheet type) made of threads pulled in parallel and made of carbon fiber containing PAN (polyacrylonitrile) as a major component, or threads made of carbon fiber into thermosetting resin, such as epoxy resin, containing a curing agent.

As characteristics of the carbon fiber composite material 93, for example, a carbon fiber type which is commercially available from Toho Tenax Co., Ltd. has tensile strength of 2060 MPa, tensile elasticity of 137 GPa, and specific gravity of 1.55 g/cc, when HTA is used, and, as compared with high tensile steel, the tensile strength is equal to or more than that, and the specific gravity is about 1/5 times as large as that. Further, since the thermal expansion coefficient can be set as -5 to +5 $\times 10^{-6}$ (K$^{-1}$) by optimizing a direction and angle of the fiber, it can be set as about 1/2 to 1/10, as compared with the conventional carbon steel.

As described above, the spindle device 10 of this embodiment includes the front inner ring spacer 332 fitted onto the rotary shaft 312 which is disposed opposite to both sides of the inner ring 352 of the front bearing 350 rotatably supporting the rotary shaft 312. The front inner ring spacer 332 has the flange-type projection 332b protruding in the axial direction from the outer peripheral side and fitted onto the outer peripheral surface 352a of the shoulder of the inner ring 352, and is made of the material having the high specific elastic modulus and the low thermal expansion coefficient relative to the inner ring 352. Accordingly, since the centrifugal force expansion of the front inner ring spacer 332 is caused by the centrifugal force during the high-speed rotation is small, the inner ring 352 is restrained by the flange-type projection 332b fitted onto the outer peripheral surface 352a of the shoulder of the inner ring 352, thereby suppressing the centrifugal force expansion of the inner ring 352. Further, since the thermal expansion amount of the front inner ring spacer 332 in the diameter direction according to the increase in temperature of the spindle device 10 is smaller than the thermal expansion amount of the inner ring 352 in the diameter direction, the inner ring 352 is pressed by the difference between the thermal expansion amounts, so that the thermal expansion of the inner ring 352 can be held smaller. In this way, the occurrence of seizing can be prevented by suppressing the increase in preload of the bearing 350 or the increase in the internal load.

Further, since the flange-type projection 332b of the front inner ring spacer 332 is formed in an annular shape, the outer peripheral surface 352a of the shoulder of the inner ring 352 is pressed by the front inner ring spacer 332 along the whole circumference thereof, so that it is possible to reliably restrain the centrifugal force expansion of the inner ring 352 and the radial thermal expansion.

Since the front inner ring spacer 332 is made of the carbon fiber composite material, it is possible to fabricate the front inner ring spacer 332 having an appropriate specific elastic modulus and thermal expansion coefficient.

Further, since the spindle device 10 of the built-in motor type includes the motor M built between the front and rear bearings 350, 360, the thermal expansion of the inner ring 352 is held down smaller by the difference thermal expansion amounts between the front inner ring spacer 332 and the inner ring 352, thereby suppressing the influence of the heat of the motor M from being exerted on the front bearing 360 to prevent the occurrence of seizing by suppressing.

As described above, since the rear bearing 360 and the rear inner ring spacer 336 of this embodiment have similar configurations as those of the front bearing 350 and the front inner ring spacer 332, similar effect is provided.

**Embodiment 13**

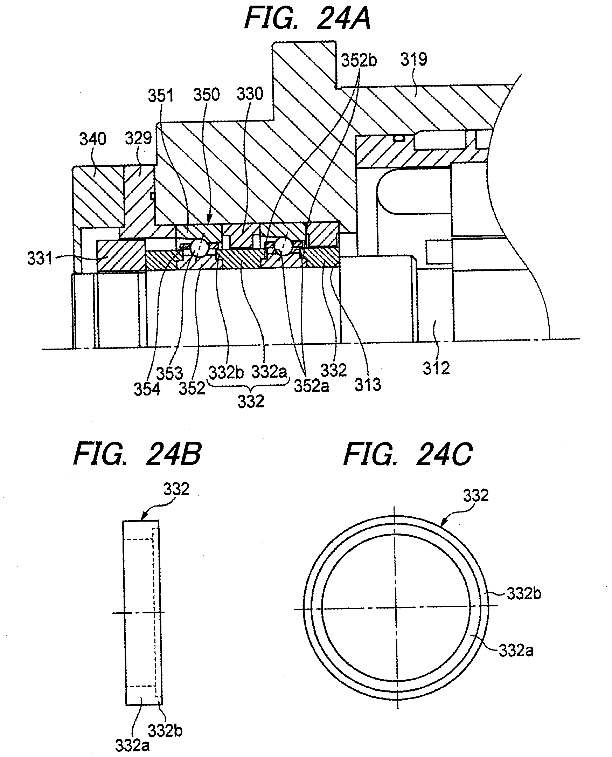

Next, the spindle device 10 of the thirteenth embodiment will be described with reference to FIG. 24. The inner ring 352 of this embodiment has small-diameter portions 352b, of which diameters of the outer peripheral surfaces 352a of both shoulders are small. Further, the inner peripheral surface of the flange-type projection 332b of the front inner ring spacer 332 is formed to have a small diameter according to the diameter of the small-diameter portion 352b. In other words, since the flange-type projection 332b is formed to have a thick thickness, as compared with the flange-type projection 332b of the twelfth embodiment, and thus the strength of the flange-type projection 332b is improved, it is not easily broken and the inner ring 352 can be strongly pressed. Other configuration and operation are similar to those of the spindle device of the twelfth embodiment.

**Embodiment 14**

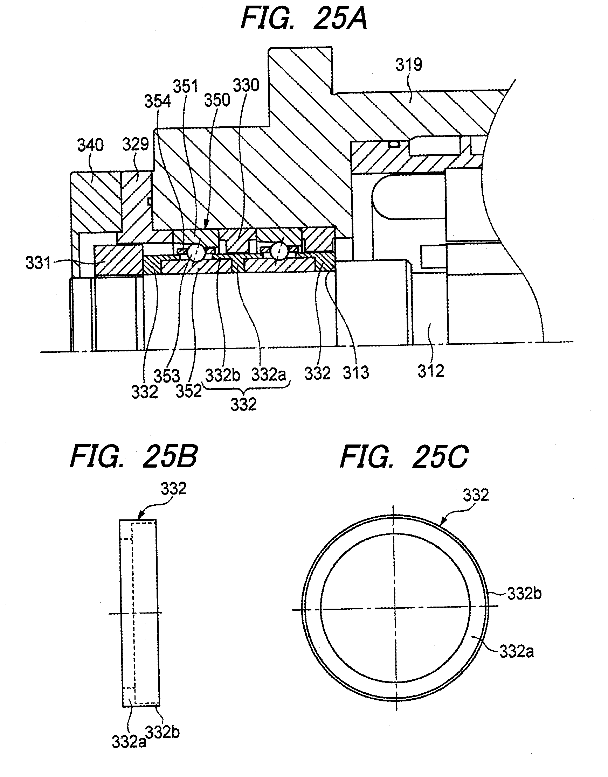

Next, the spindle device 10 of the fourteenth embodiment will be described with reference to FIG. 25. The inner ring 352 of this embodiment has an axial width wider than that of the outer ring 351. To this end, the flange-type projection 332b is formed to have a wide axial width, and the body portion 332a is formed to have a narrow axial width. Accordingly, it is possible to press the outer peripheral surface 352a of the shoulder of the inner ring 352 in a relatively wide axial width (area) by the flange-type projection 332b, without affecting the internal structure of the front bearing 350. Other configuration and operation are similar to those of the spindle device of the eleventh embodiment.

**Embodiment 15**

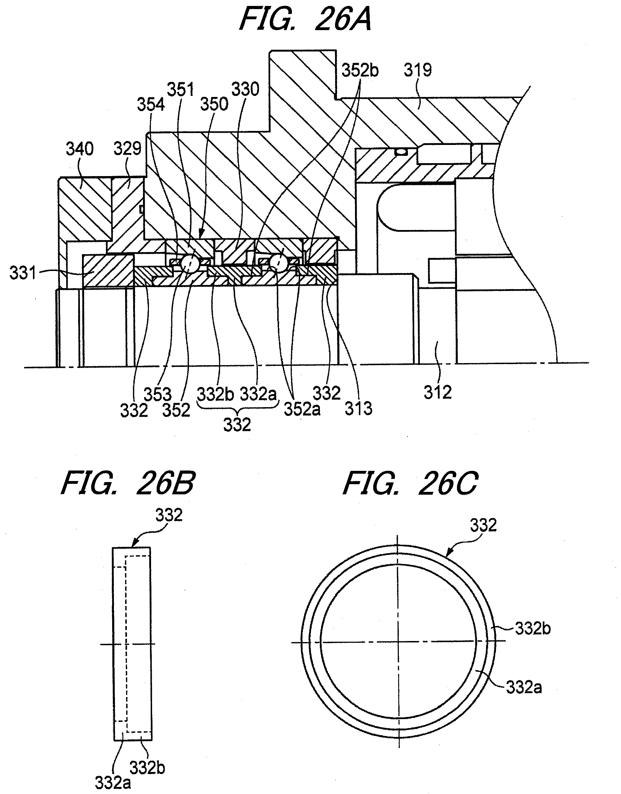

Next, the spindle device 10 of the fifteenth embodiment will be described with reference to FIG. 26. The inner ring 352 of this embodiment uses the combination of the inner ring 352 and the front inner ring 332 of the thirteenth and fourteenth embodiments. That is, the inner ring 352 is formed to be wide in which, and the small-diameter portions 352b are formed at the outer peripheral surface 352a of both shoulders. Accordingly, the strength of the flange-type projection 332b of the front inner ring spacer 332 is improved, and the small-diameter portion 352b (outer peripheral surface 352a) of the inner ring 352 can be strongly pressed in the wide axial width. Other configuration and operation are similar to those of the spindle device of the eleventh embodiment.

**Embodiment 16**

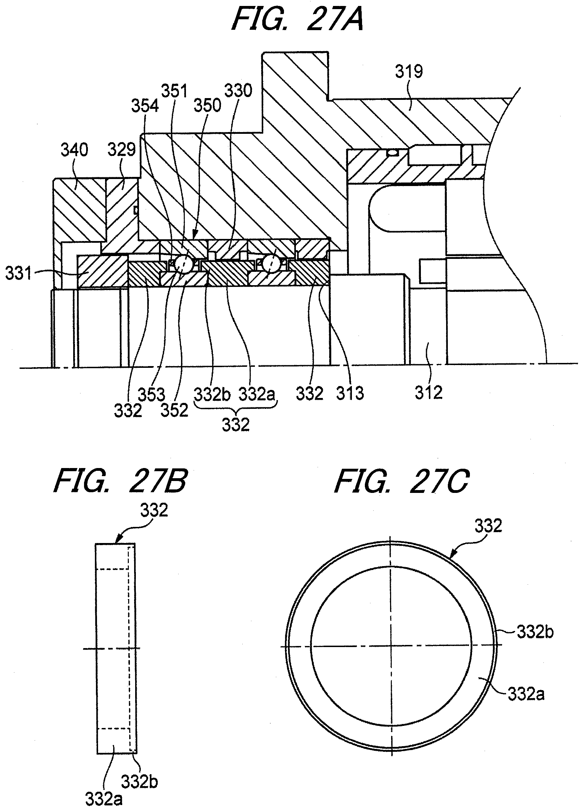

Next, the spindle device 10 of the sixteenth embodiment will be described with reference to FIG. 27. The inner ring 352 of this embodiment has a retainer 354 having a narrow axial width, thereby preventing the contact (interference) between the retainer 354 and the flange-type projection 332b and enlarging the outer diameter of the flange-type projection 332b. Accordingly, the flange-type projection 352b is formed to have a thick thickness, the strength of the flange-type projection 332b is improved, thereby effectively pressing the outer peripheral surface 352a of the shoulder of the inner ring 352. Other configuration and operation are similar to those of the spindle device of the eleventh embodiment.

**Embodiment 17**

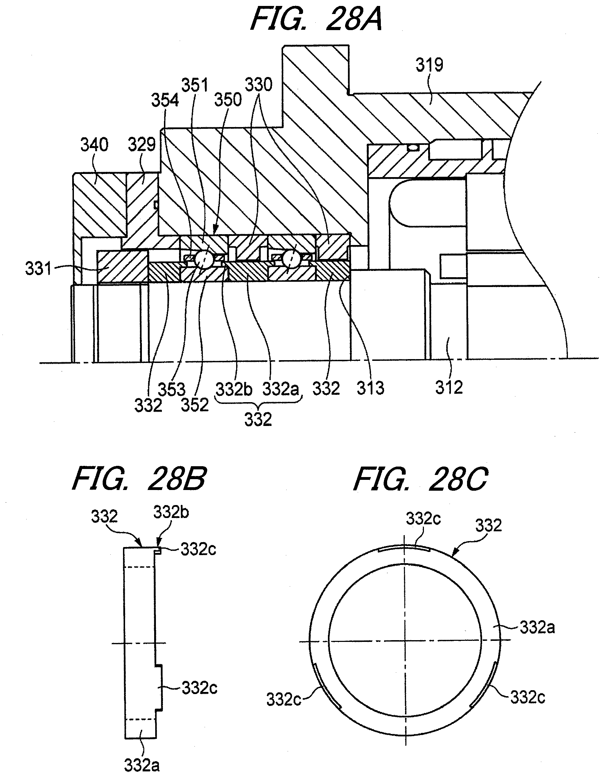

Next, the spindle device 10 of the seventeenth embodiment will be described with reference to FIG. 28. The flange-type projection 332b of the front inner ring spacer 332 of this embodiment has a plurality (three in this embodiment) of projections 332c spaced apart from each other in a circumferential direction and protruding in the axial direction from the body portion 332a. The projections 332c are formed integrally with the body portion 332a. In this way, since the plurality of projections 332c are spaced and provided in the circumferential direction, the heat contained in the inner ring 352 can be radiated from the gap formed between the adjacent projections 332c.

The number, a circumferential length, and a circumferential interval of the projections 332c may be appropriately set in view of heat dissipation of the inner ring 352 or the strength of the flange-type projection 332b. Further, the flange-type projection 332b of this embodiment can be applied to any one of the spindle devices described in the above embodiments, and further improve the heat dissipation of the inner ring 352, in addition to the effect described in the above embodiments. Other configuration and operation are similar to those of the spindle device of the above-described embodiments.

**Embodiment 18**

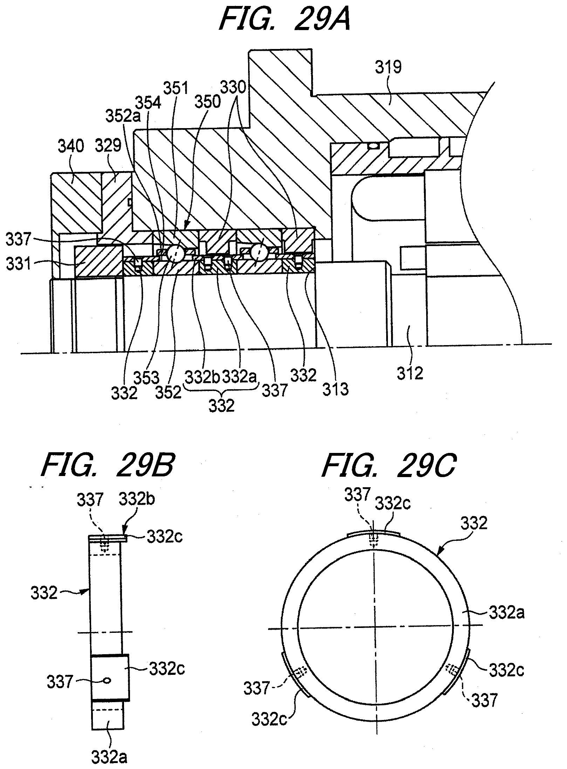

Next, the spindle device 10 of the eighteenth embodiment will be described with reference to FIG. 29. The front inner ring spacer 332 of this embodiment has a body portion 332a formed in an annular shape and a front flange-type projection 332b formed separately from the body portion 332a. The flange-type projection 332b has three projections 332c spaced apart from each other in a circumferential direction, similar to the seventeenth embodiment. Each projection 332c is fastened to the outer peripheral surface of the body portion 332a by a screw 337, and is fitted onto the outer surface 352a of the shoulder of the inner ring 352 with interference of zero or more.

In this embodiment, when the flange-type projection 332b of the front inner ring 332 is fitted to the outer peripheral surface 352a of the shoulder of the inner ring 352 with the interference of zero or more, the plurality of projections 332c forming the flange-type projection 332b are fastened by the screw 337, thereby improving its assembling performance. Further, since the gap is formed between the projections 332c adjacent in the circumferential direction, the heat of the inner ring 352 can be radiated from the gap.

The spindle device of this embodiment can be applied to any one of the spindle devices described in the above embodiments, and other configuration and operation are similar to those of the spindle device of the above-described embodiments.

**Embodiment 19**

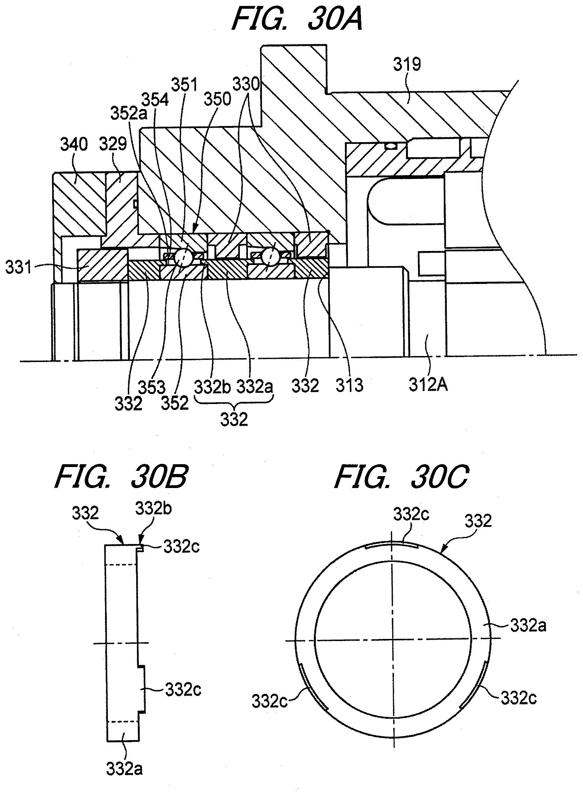

Now, the spindle device 10 of the nineteenth embodiment will be described with reference to FIG. 30. The spindle device 10 of this embodiment includes the inner ring 352 and the front inner ring spacer 332 which are the same shape as that of the seventeenth embodiment (see FIG. 28), and a rotary shaft 312a is made of the same material as that of the front inner ring spacer 332, that is, carbon fiber composite material.

In this way, the rotary shaft 312a is made of the carbon fiber composite material, as well as the front inner ring spacer 332, so that the spindle device 10 is downsized in weight to increase the natural frequency (resonance frequency). Further, since the acceleration/deceleration inertia is reduced, the accelerating/decelerating time of the spindle device 10 can be decreased, and thus the actual machining time is secured to improve its productivity. Further, the load imparted to the motor is decreased. Therefore, in the case where the acceleration/deceleration time is equal, a motor of a low-torque spec can be employed to downsize the spindle device 10.

If the rotary shaft 312a and the front inner ring spacer 332 are made of the same material (carbon fiber composite material), the expansion amount of the rotary shaft 312a caused by the centrifugal force tends to be smaller than that of the front inner ring spacer 332 caused by the centrifugal force due to the difference in thickness therebetween. Therefore, in view of the difference in expansion amounts caused by the centrifugal force, the appropriate interference is select not to form a gap between the rotary shaft 312a and the front inner ring spacer 332 even at the maximum rotational speed. If there is a gap between the rotary shaft 312a and the front inner ring spacer 332, the centrifugal force expansion and the thermal expansion of the inner ring 352 may not be suppressed by the front inner ring spacer 332.

The spindle device of this embodiment can be applied to any one of the spindle devices described in the above embodiments, and other configuration and operation are similar to those of the spindle device of the above-described embodiments.

**Embodiment 20**

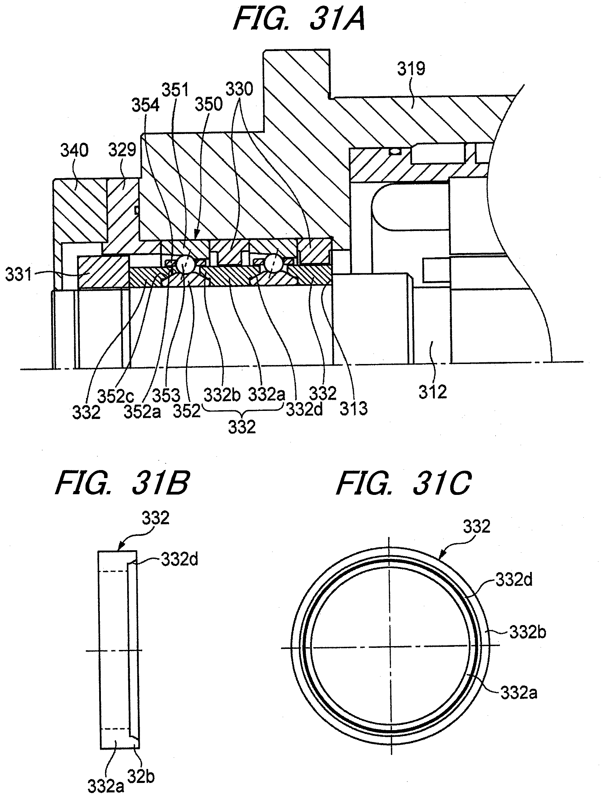

FIG. 31 is an enlarged cross-sectional view illustrating the vicinity of the front bearing 350 of the spindle device 10 according to the twentieth embodiment. The inner ring 352 of this embodiment has an outer-peripheral tapered portion 352c formed on the outer peripheral surface 352a of the shoulder, and a diameter of the tapered portion 352c is gradually decreased toward the axial end, with its thickness becoming thin towards the axial end. Further, the front inner ring spacer 332 has an inner-peripheral tapered portion 332d formed on the inner peripheral surface 332b, and a diameter of the tapered portion 332b is gradually increased toward the axial end, with its thickness becoming thick towards the axial end. The outer-peripheral tapered portion 352c of the inner ring 352 and the inner-peripheral tapered portion 332d of the flange-type projection 332b of the front inner ring spacer 332 are fitted with each other to restrain the inner ring 352 from the outer side in the diameter direction.

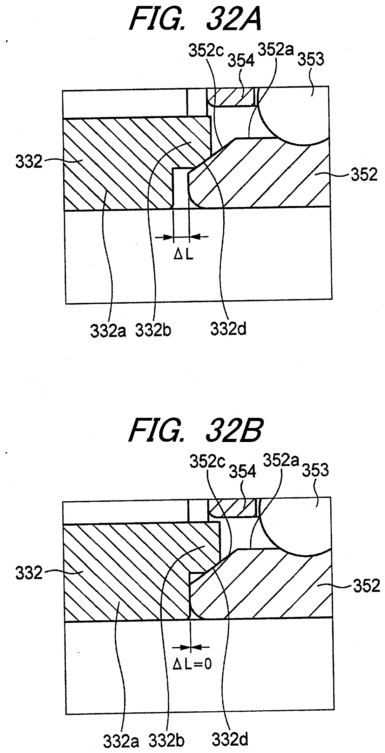

Now, the method of fastening the inner ring 352 and the front inner ring spacer 332 according to this embodiment will be described in detail. First, as illustrated in FIG. 32A, the inner ring 352 and the front inner ring spacer 332 are disposed in an opposed manner via an axial gap $\Delta L$ (> 0), in the state in which the outer-peripheral tapered portion 352c of the inner ring 352 $\Delta$abuts against the inner-peripheral tapered portion 332c of the flange-type projection 332b. Subsequently, as the nut 331 (see FIG. 31) abutting against the front inner ring spacer 332 is fastened toward the axial rear until the axial gap $\Delta L$ becomes zero, the inner ring 352 is positioned in the axial direction, and simultaneously, the outer-peripheral tapered portion 352c of the inner ring 352 and the inner-peripheral tapered portion 332d of the flange-type projection 332b are fitted with each other with interference (see FIG. 32B).

According to the spindle device 10 of this embodiment, as the value of the axial gap $\Delta L$ is appropriately set before the nut 331 is fastened, an axial fastening force of the inner ring 352 and the front inner ring spacer 332 can be adjusted to appropriately adjust the fitting between the outer-peripheral tapered portion 352c and the inner-peripheral tapered portion 332d. Further, since the outer-peripheral tapered portion 352c of the inner ring 352 is fitted with the inner-peripheral tapered portion 332c of the flange-type projection 332b of the front inner ring spacer 332, it is possible to suppress the axial fastening force between the inner ring 352 and the front inner ring spacer 332 from being reduced due to the relative thermal expansion difference of the rotary shaft 312, the inner ring 352 and the front inner ring spacer 332 in the axial direction. Other configuration and operation are similar to those of the spindle device of the above-described embodiments, and the spindle device 10 of this embodiment can be applied to any one of the spindle devices 10 described in the above embodiments.

Further, the configuration of preventing the axial fastening force of the inner ring 352 and the front inner ring spacer 332 from being reduced is not limited to the configuration of this embodiment. For example, a configuration in which a resilient member, such as a disc spring (not illustrated), is disposed between the inner ring 352, the nut 331 and the front inner ring spacer 332, or a configuration in which the fastening force of the nut 331 is increased to resiliently deform the front inner ring spacer 332 made of the carbon fiber composite material in advance may be employed.

**Embodiment 21**

In the spindle device 10 of the above-described embodiments, the configuration, in which the angular ball bearings (front bearing) 50 of two rows are combined in parallel, has been described, a configuration of a back-to-back arrangement may be used, similar to the spindle device 10 of the twenty-first embodiment. Also, the rear bearing 360 may be configured as the angular ball bearings 350 of back-to-back arrangement type.

**Embodiment 22**

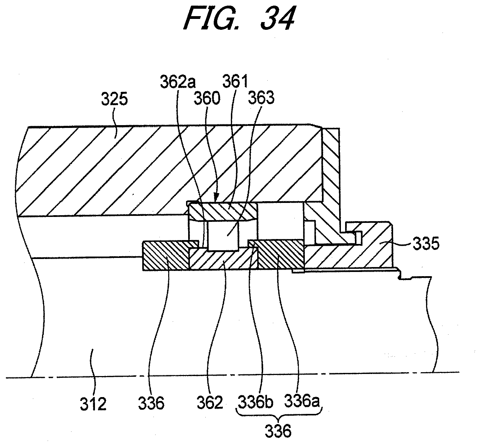

As the spindle device of the twenty-second embodiment illustrated in FIG. 34, the rear bearing 360 may be a cylindrical roller bearing. In this instance, rear inner ring spacers 336 having the body portion 336a and the flange-type projection 336b are disposed in an opposed manner at both sides of the rear bearing 360, and the outer peripheral surface 362a of the shoulder of the inner ring 362 is pressed by the flange-type projection 336b of the rear inner ring spacer 336, thereby suppressing the expansion of the inner ring 362.

In the twelfth to twenty-second embodiments, the front bearing 350 and the front inner ring spacer 332, and the rear bearing 360 and the rear inner ring spacer 336 have the same configuration, but, they do not necessarily have the same configuration. One pair of inner ring spacers 332, 336 having the flange-type projections 332b and 336b at both sides of the inner rings 352, 362 of at least one of the front and rear bearings 350, 360 may be disposed in an opposed manner.

Further, the present invention is not limited to the above-described embodiments, but can be appropriately modified or revised. Also, the above-described embodiments can be appropriately combined and applied within a feasible range. For example, in the above-described embodiments, the front bearing and the rear bearings are constituted by one pair of angular ball bearings, but the kind or the number of the bearings is not limited thereto. The kind, the number of rows, displacement, or arrangement can be appropriately designed, for example, by combining the ball bearing and the cylindrical roller bearing, depending upon the use state.

**Further Embodiments**

According to a further embodiment of the present teaching, a spindle device comprises a rotary shaft; front and rear bearings each configured to rotatably support the rotary shaft with respect to a housing; and a motor including a rotor fitted onto the rotary shaft at a location between the front and rear bearings, and a stator disposed around the rotor, characterized in that the rotary shaft comprises a first cylindrical member made of a metal material, and a second cylindrical member disposed on an outer peripheral surface of the first cylindrical member, and having an outer peripheral surface on which the rotor is fitted, the second cylindrical member being made of a material having high specific elastic modulus and low linear expansion coefficient, relative to the metal material of the first cylindrical member.

According to a further embodiment of the above spindle device, the rotor is fitted onto the second cylindrical member with interference.

According to a further embodiment of the above spindle device, the first cylindrical member comprises a small-diameter portion on which the second cylindrical member is disposed, and a large-diameter portion having a male threaded portion to which a nut that restricts an axial position of the front bearing is fastened.

According to a further embodiment of the above spindle device, the front bearing and the rear bearing are fitted onto the second cylindrical member.

According to a further embodiment of the above spindle device, the spindle device further comprises a third cylindrical member disposed on an outer peripheral surface of the second cylindrical member at a position axially spaced apart from the outer peripheral surface on which the rotor is fitted, and having an outer peripheral surface on which an inner ring of the front bearing or the rear bearing is fitted, the third cylindrical member being made of a metal material.

According to a further embodiment of the above spindle device, the second cylindrical member comprises a stepped portion such that the outer peripheral surface, on which the third cylindrical member is disposed, has a smaller diameter, and the third cylindrical member comprises a flange portion held between an axial side face of the stepped portion and an axial end face of the inner ring.

According to a further embodiment of the above spindle device, the third cylindrical member is a thin-walled sleeve fitted onto the outer peripheral surface of the second cylindrical member.

According to a further embodiment, the third cylindrical member is a thin film member joined electrically or chemically to the outer peripheral surface of the second cylindrical member.

According to a further embodiment of the above spindle device, the third cylindrical member comprises two third cylindrical members to which the inner rings of the front bearing and the rear bearing are fitted respectively.

According to a further embodiment of the above spindle device, the second cylindrical member is carbon fiber composite material.

According to a further embodiment of the present teaching, a spindle device comprises a rotary shaft; front and rear bearings each configured to rotatably support the rotary shaft with respect to a housing; and a motor including a rotor disposed between the front and rear bearings to rotate together with the rotary shaft, and a stator disposed around the rotor, characterized in that a cylindrical member having a lower heat transfer coefficient than the rotary shaft is disposed between the rotary shaft and the rotor.

According to a further embodiment of the above spindle device, the cylindrical member is made of carbon fiber composite material.

According to a further embodiment of the present teaching, a spindle device comprises a rotary shaft; front and rear bearings each configured to rotatably support the rotary shaft with respect to a housing; and a motor including a rotor disposed to rotate integrally with the rotary shaft between the front and rear bearings, and a stator disposed around the rotor, characterized in that a rotor sleeve is provided between the rotor and the rotary shaft, and a member having a lower heat transfer coefficient than the rotary shaft is partially provided on one of opposing surfaces of the rotor sleeve and the rotary shaft.

According to a further embodiment of the above spindle device, an inner peripheral surface of the rotor sleeve is formed with annular inward protrusions defining a plurality of annular grooves, the member having the lower heat transfer coefficient than the rotary shaft is disposed in the plurality of annular grooves, and the annular inward protrusions of the rotor sleeve and an outer peripheral surface of the rotary shaft are fitted with interference.

According to a further embodiment of the above spindle device, an outer peripheral surface of the rotary shaft is formed with annular outward protrusions defining a plurality of annular grooves, the member having the lower heat transfer coefficient than the rotary shaft is disposed in the plurality of annular grooves, and an inner peripheral surface of the rotor sleeve and the annular outward protrusions of the rotor sleeve are fitted with interference.

According to a further embodiment of the above spindle device, the member having the lower heat transfer coefficient than the rotary shaft is made of carbon fiber composite material.

According to a further embodiment of the present teaching, a spindle device comprises a rotary shaft; front and rear bearings each configured to rotatably support the rotary shaft with respect to a housing; and a motor including a rotor disposed between the front and rear bearings to rotate together with the rotary shaft, and a stator disposed around the rotor, characterized in that a cylindrical member having a lower heat transfer coefficient than the rotary shaft is disposed between the front and rear bearings and at at least one location on an inner peripheral surface of the rotary shaft and an outer peripheral surface of the rotary shaft that is spaced apart from the location where the rotor or a rotor sleeve, to which the rotor is attached, is fitted.

According to a further embodiment of the above spindle device, the member having the lower heat transfer coefficient than the rotary shaft is made of carbon fiber composite material.

According to a further embodiment of the present teaching, a spindle device comprises a rotary shaft; and front and rear bearings each configured to rotatably support the rotary shaft with respect to a housing, characterized in that the housing includes an inner sleeve made of metal and fitted at least onto the rear bearing, and an outer sleeve made of carbon fiber composite material and fitted onto the inner sleeve.

According to a further embodiment of the above spindle device, the inner sleeve is fitted onto the front bearing and the rear bearing, and the inner sleeve and the outer sleeve are fitted to each other with clearance.

According to a further embodiment of the above spindle device, the housing further includes a front bearing housing in front of the inner sleeve and the outer sleeve in an axial direction, and the front bearing housing is fitted onto the front bearing.

According to a further embodiment of the above spindle device, a coolant supply passage for circulating and supplying a coolant is provided at a fitting portion between the inner sleeve and the outer sleeve.

According to a further embodiment of the above spindle device, a seal member for sealing the coolant supply passage is disposed at both axial ends of the fitting portion between the inner sleeve and the outer sleeve.

According to a further embodiment of the present teaching, a spindle device comprises a rotary shaft; a fixed-side bearing having an inner ring fitted onto one end portion of the rotary shaft, and an outer ring fixed to a housing; a bearing sleeve disposed at the other end portion of the rotary shaft, and fitted to the housing with clearance; and a free-side bearing having an inner ring fitted onto the other end portion of the rotary shaft, and an outer ring fitted to the bearing sleeve, and rotatably supporting the rotary shaft in cooperation with the fixed-side bearing, characterized in that the bearing sleeve includes at least annular carbon fiber composite material having the same axial length as the bearing sleeve.

According to a further embodiment of the above spindle device, the bearing sleeve includes an annular outer metal member disposed at an outer diameter side thereof and having an outer peripheral surface fitted to the housing, an annular inner metal member disposed at an inner diameter side thereof and having an inner peripheral surface fitted to the outer ring, and the carbon fiber composite material disposed between the annular outer metal member and the annular inner metal member.

According to a further embodiment of the above spindle device, the bearing sleeve includes an annular outer metal member disposed at an outer diameter side thereof and having an outer peripheral surface fitted to the housing, and the carbon fiber composite material disposed on an inner side of the annular outer metal member and having an inner peripheral surface fitted to the outer ring.

According to a further embodiment of the above spindle device, the bearing sleeve includes the carbon fiber composite material disposed at an outer diameter side thereof and having an outer peripheral surface fitted to the housing, and an annular inner metal member disposed on an inner side of the carbon fiber composite material and having an inner peripheral surface fitted to the outer ring.

According to a further embodiment of the above spindle device, the fixed-side bearing and the free-side bearing are configured to be applied with a constant pressure preload, and an outer ring holder contacting an end face of the outer ring of the free-side bearing is provided on the bearing sleeve.

According to a further embodiment of the above spindle device, the fixed-side bearing and the free-side bearing are configured to be applied with a constant pressure preload, and the outer ring of the free-side bearing and the bearing sleeve are fitted to each other with clearance, and the outer ring of the free-side bearing is positioned in an axial direction by a shoulder protruding radially inwardly from the bearing sleeve and an outer ring holder fixed to the bearing sleeve.

According to a further embodiment of the present teaching, a spindle device comprises a rotary shaft; and front and rear bearings each configured to rotatably support the rotary shaft with respect to a housing; and wherein the rotary shaft and inner rings of the front and rear bearings are fitted to each other with interference of zero or more, characterized in that the spindle device further comprises a pair of inner ring spacers disposed in an opposed manner at both sides of an inner ring of at least one the front and rear bearings, and fitted onto the rotary shaft, and the inner ring spacer includes a flange-type projection protruding in an axial direction from an outer peripheral side and fitted onto a shoulder of an outer peripheral surface of the inner ring, and the inner ring spacer is made of a material having low thermal expansion coefficient and high specific elastic modulus, relative to the inner ring.

According to a further embodiment of the above spindle device, the outer peripheral surface of the shoulder of the inner ring has an outer-peripheral tapered portion with a diameter gradually decreased toward an axial end portion, an inner peripheral surface of the flange-type projection of the inner ring spacer has an inner-peripheral tapered portion with a diameter gradually increased toward an axial end portion, and the outer-peripheral tapered portion of the inner ring and the inner-peripheral tapered portion of the flange-type projection of the inner ring spacer are fitted to each other.

According to a further embodiment of the above spindle device, the inner ring spacer includes a body portion formed in an annular shape and fitted onto the rotary shaft with interference, and the flange-type projection formed separately from the body portion, and the flange-type projection is fastened to an outer peripheral surface of the body portion.

According to a further embodiment of the above spindle device, the flange-type projection is formed in an annular shape.

According to a further embodiment of the above spindle device, the flange-type projection is formed by a plurality of projections spaced apart from each other in a circumferential direction.

According to a further embodiment of the above spindle device, the inner ring spacer is made of carbon fiber composite material.

According to a further embodiment of the above spindle device, in addition to the inner ring spacer, the rotary shaft is made of carbon fiber composite material.

According to a further embodiment of the above spindle device, the spindle device is a spindle device of a built-in motor type including a motor having a rotor fitted onto the rotary shaft at a location between the front and rear bearings, and a stator disposed around the rotor.

The present application is based on Japanese Patent Application No. 2011-159093 filed on July 20, 2011, Japanese Patent Application No. 2011-159094 filed on July 20, 2011, Japanese Patent Application No. 2011-160973 filed on July 22, 2011, Japanese Patent Application No. 2011-160974 filed on July 22, 2011, Japanese Patent Application No. 2011-160975 filed on July 22, 2011, Japanese Patent Application No. 2011-160976 filed on July 22, 2011, and Japanese Patent Application No. 2011-222158 filed on October 6, 2011.

**Lest of Reference Signs**

10: spindle device
12, 113, 212, 312: rotary shaft
20, 220, 320: rotor
22, 222, 322: stator
24, 224, 324: rear housing
25, 225, 325: bearing sleeve
50, 150, 250, 350: front bearing
52, 62, 152, 162, 252, 262, 352, 362: inner ring
53, 63, 153, 163, 253, 263, 353, 363: ball
60, 160, 260, 360: rear bearing
70, 70a: rotor sleeve (cylindrical member)
71: first cylindrical member

72: second cylindrical member
73: third cylindrical member
91, 94: annular groove
92: outward protrusions
93: carbon fiber composite material (member having low heat transfer coefficient)
95: inward protrusions
96: outer peripheral annular groove
97: inner peripheral annular groove
111: inner sleeve
112: outer sleeve
115: coolant supply passage
119: O-ring (seal member)
135: front bearing housing
250: front bearing (fixed-side bearing)
260: rear bearing (free-side bearing)
271, 283: outer metal member
272, 282: inner metal member
273, 281 carbon fiber composite material
332: front inner ring spacer (inner ring spacer)
332a, 336a: body portion
332b, 336b: flange-type projection
332d: inner-peripheral tapered portion
332c: projection
336: rear inner ring spacer (inner ring spacer)
352a: outer peripheral surface
352c: outer-peripheral tapered portion
354, 364: retainer
H: housing
M: motor
ΔL: axial gap (axial gap)

**Claims**

1. A spindle device (10) comprising:

a rotary shaft (212),
a housing (H),
a fixed-side bearing (250) having an inner ring (252) fitted onto one end portion of the rotary shaft (212) and an outer ring (251) fixed to the housing (H);
a bearing sleeve (225) disposed at the other end portion of the rotary shaft (212), and fitted to the housing (H) with clearance; and
a free-side bearing (260) having an inner ring (262) fitted onto the other end portion of the rotary shaft (212), and an outer ring (261) fitted to the bearing sleeve (225), and rotatably supporting the rotary shaft (212) in cooperation with the fixed-side bearing (250),
**characterized in that**
the bearing sleeve (225) includes at least annular carbon fiber composite material (273) having the same axial length as the bearing sleeve (225), and

(a) the bearing sleeve (225) includes an annular outer metal member (271) disposed at an outer diameter side thereof and having an outer peripheral surface fitted to the housing (H), an annular inner metal member (272) disposed at an inner diameter side thereof and having an inner peripheral surface fitted to the outer ring (261), and the carbon fiber composite material (273) disposed between the annular outer metal member (271) and the annular inner metal member (272), or
(b) the bearing sleeve (225) includes an annular outer metal member (271) disposed at an outer diameter side thereof and having an outer peripheral surface fitted to the housing (H), and the carbon fiber composite material (273) disposed on an inner side of the annular outer metal member (271) and having an inner peripheral surface fitted to the outer ring (261), or
(c) the bearing sleeve (225) includes the carbon fiber composite material (273) disposed at an outer diameter side thereof and having an outer peripheral surface fitted to the housing (H), and an annular inner metal member (272) disposed on an inner side of the carbon fiber composite material (273) and having an inner peripheral surface fitted to the outer ring (261).

2. The spindle device (10) according to claim 1, wherein the fixed-side bearing (250) and the free-side bearing (260) are configured to be applied with a constant pressure preload, and an outer ring holder (233) contacting an end face of the outer ring of the free-side bearing is provided on the bearing sleeve (225).

3. The spindle device (10) according to claim 1 or 2, wherein the fixed-side bearing (250) and the free-side bearing (260) are configured to be applied with a constant pressure preload, and
the outer ring (261) of the free-side bearing (260) and the bearing sleeve (225) are fitted to each other with clearance, and the outer ring (261) of the free-side bearing (260) is positioned in an axial direction by a shoulder protruding radially inwardly from the bearing sleeve (225) and an outer ring holder (233) fixed to the bearing sleeve (225).

**Patentansprüche**

1. Eine Spindelvorrichtung (10), umfassend:

eine Drehwelle (212),
ein Gehäuse (H),
ein Festlager (250) mit einem Innenring (252), der an einem Endabschnitt der Drehwelle (212) angebracht ist, und einem Außenring (251), der an dem Gehäuse (H) befestigt ist;

eine Lagerhülse (225), die am anderen Endabschnitt der Drehwelle (212) angeordnet ist und mit Spiel an dem Gehäuse (H) angebracht ist; und

ein Loslager (260) mit einem Innenring (262), der an dem anderen Endabschnitt der Drehwelle (212) angebracht ist, und einem Außenring (261), der an der Lagerhülse (225) angebracht ist, und die Drehwelle in Zusammenwirken mit dem Festlager (250) drehbar lagert, **dadurch gekennzeichnet, dass** die Lagerhülse (225) wenigstens ein ringförmiges Kohlefaserverbundmaterial (273) umfasst, das die gleiche axiale Länge wie die Lagerhülse (225) aufweist, und

(a) die Lagerhülse (225) ein ringförmiges äußeres Metallelement (271) umfasst, das an einer Außendurchmesserseite davon angeordnet ist und eine äußere Umfangsfläche aufweist, die an dem Gehäuse (H) angebracht ist, ein ringförmiges inneres Metallelement (272), das an einer Innendurchmesserseite davon angeordnet ist und eine innere Umfangsfläche aufweist, die an dem Außenring (261) angebracht ist, und das Kohlefaserverbundmaterial (273) zwischen dem ringförmigen äußeren Metallelement (271) und dem ringförmigen inneren Metallelement (272) angeordnet ist, oder

(b) die Lagerhülse (225) ein ringförmiges äußeres Metallelement (271) umfasst, das an einer Außendurchmesserseite davon angeordnet ist und eine äußere Umfangsfläche aufweist, die an dem Gehäuse (H) angebracht ist, und das Kohlefaserverbundmaterial (273) an einer Innenseite des ringförmigen äußeren Metallelements (271) angeordnet ist und einen Außenring (261) aufweist, der an der inneren Umfangsfläche angebracht ist, oder

(c) die Lagerhülse (225) das Kohlefaserverbundmaterial (273) umfasst, das an einer Außendurchmesserseite davon angeordnet ist und eine äußere Umfangsfläche aufweist, die an dem Gehäuse (H) angebracht ist, und ein ringförmiges inneres Metallelement (272), das an einer Innenseite des Kohlenstofffaserverbundmaterials (273) angeordnet ist und eine innere Umfangsfläche aufweist, die an dem Außenring (261) angebracht ist.

2. Die Spindelvorrichtung (10) nach Anspruch 1, wobei das Festlager (250) und das Loslager (260) so konfiguriert sind, dass sie mit einer konstanten Druckvorspannung beaufschlagt werden, und ein Außenringhalter (233), der eine Endfläche des Außenrings des Loslagers kontaktiert, an der Lagerhülse (225) vorgesehen ist.

3. Die Spindelvorrichtung (10) nach Anspruch 1 oder 2, wobei das Festlager (250) und das Loslager (260) so konfiguriert sind, dass sie mit einer konstanten Druckvorspannung beaufschlagt werden, und der Außenring (261) des Loslagers (260) und die Lagerhülse (225) mit Spiel aneinandergepasst sind, und der Außenring (261) des Loslagers (260) in einer Position in axialer Richtung durch eine Schulter angeordnet ist, die von der Lagerhülse (225) radial nach innen vorsteht, und einen Außenringhalter (233), der an der Lagerhülse (225) befestigt ist.

## Revendications

1. Dispositif de broche (10) comprenant :

un arbre rotatif (212),
un boîtier (H),
un palier côté fixe (250) comportant une bague intérieure (252) ajustée sur une partie d'extrémité de l'arbre rotatif (212) et une bague extérieure (251) fixée au boîtier (H) ;
un manchon de palier (225) disposé à l'autre extrémité de l'arbre rotatif (212), et ajusté sur le boîtier (H) avec un jeu ; et
un palier côté libre (260) comportant une bague intérieure (262) ajustée sur l'autre partie d'extrémité de l'arbre rotatif (212), et une bague extérieure (261) ajustée sur le manchon de palier (225), et supportant de manière rotative l'arbre rotatif (212) en coopération avec le palier côté fixe (250),
**caractérisé en ce que**
le manchon de palier (225) comprend au moins un matériau composite annulaire en fibres de carbone (273) ayant la même longueur axiale que le manchon de palier (225), et

(a) le manchon de palier (225) comprend un élément métallique extérieur annulaire (271) disposé sur son côté de diamètre extérieur et ayant une surface périphérique extérieure ajustée sur le boîtier (H), un élément métallique intérieur annulaire (272) disposé sur son côté de diamètre intérieur et ayant une surface périphérique intérieure ajustée sur la bague extérieure (261), et le matériau composite en fibres de carbone (273) disposé entre l'élément métallique extérieur annulaire (271) et l'élément métallique intérieur annulaire (272), ou

(b) le manchon de palier (225) comprend un élément métallique extérieur annulaire (271) disposé sur son côté de diamètre extérieur et ayant une surface périphérique extérieure ajustée sur le boîtier (H), et le matériau composite en fibres de carbone (273) disposé sur un côté intérieur de l'élément métallique extérieur annulaire (271) et ayant une surface périphérique intérieure ajustée sur la bague extérieure (261), ou

(c) le manchon de palier (225) comprend le matériau composite en fibres de carbone (273) disposé sur son côté de diamètre extérieur et ayant une surface périphérique extérieure ajustée sur le boîtier (H), et un élément métallique intérieur annulaire (272) disposé sur une côté intérieur du matériau composite en fibres de carbone (273) et ayant une surface périphérique intérieure ajustée sur la bague extérieure (261).

2. Dispositif de broche (10) selon la revendication 1, dans lequel le palier côté fixe (250) et le palier côté libre (260) sont configurés pour être appliqués avec une précharge à pression constante, et un support de bague extérieure (233) en contact avec une face d'extrémité de la bague extérieure du palier côté libre est agencé sur le manchon de palier (225).

3. Dispositif de broche (10) selon la revendication 1 ou 2, dans lequel le palier côté fixe (250) et le palier côté libre (260) sont configurés pour être appliqués avec une précharge à pression constante, et la bague extérieure (261) du palier côté libre (260) et le manchon de palier (225) sont ajusté l'un sur l'autre avec un jeu, et la bague extérieure (261) du palier côté libre (260) est positionnée dans une direction axiale par un épaulement faisant saillie radialement vers l'intérieur depuis le manchon de palier (225) et un support de bague extérieure (233) fixé au manchon de palier (225).

# FIG. 1

# FIG. 2

(a)

(b)

## FIG. 3

## FIG. 4

## FIG. 5

FIG. 6

FIG. 7

# FIG. 8

# FIG. 9

# FIG. 10

# FIG. 11

# FIG. 12

## FIG. 13

# FIG. 14

## FIG. 15

## FIG. 16

EP 3 098 004 B1

FIG. 17

47

# FIG. 18

FIG. 19

## FIG. 20

# FIG. 21

## FIG. 22

## FIG. 23A

## FIG. 23B

## FIG. 23C

## FIG. 24A

## FIG. 24B

## FIG. 24C

## FIG. 25A

## FIG. 25B

## FIG. 25C

## FIG. 26A

## FIG. 26B

## FIG. 26C

## FIG. 27A

## FIG. 27B

## FIG. 27C

## FIG. 28A

## FIG. 28B

## FIG. 28C

FIG. 29A

FIG. 29B

FIG. 29C

## FIG. 30A

## FIG. 30B

## FIG. 30C

## FIG. 31A

## FIG. 31B

## FIG. 31C

## FIG. 32A

## FIG. 32B

*FIG. 33A*

*FIG. 33B*

*FIG. 33C*

# FIG. 34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006088245 A
- JP 2167602 A
- JP 7051903 A
- JP 6226506 A
- JP 6218608 A
- JP 6226516 A
- JP 2756155 B
- JP 1295025 A
- JP 2011159093 A
- JP 2011159094 A
- JP 2011160973 A
- JP 2011160974 A
- JP 2011160975 A
- JP 2011160976 A
- JP 2011222158 A